# EUROPEAN PATENT APPLICATION

(11) **EP 4 643 840 A1**
(43) Date of publication of application: **05.11.2025**
(21) Application number: 23912193.2
(22) Date of filing: 26.12.2023
(51) Int. Cl.: A61J 1/05

(54) **MEDICAL CAP, MEDICAL CONTAINER, AND METHOD FOR MANUFACTURING MEDICAL CAP**

(30) Priority: 28.12.2022 JP 2022212538
(71) Applicant: Otsuka Pharmaceutical Factory, Inc., Naruto-shi, Tokushima 772-8601 (JP)
(72) Inventor: TAGATA, Hiroyuki, Higashiosaka-shi, Osaka 578-0925 (JP); DATE, Miyuki, Naruto-shi, Tokushima 772-8601 (JP); MANABE, Yuki, Naruto-shi, Tokushima 772-8601 (JP); FUJIWARA, Kazushi, Naruto-shi, Tokushima 772-8601 (JP); MARUOKA, Ken, Naruto-shi, Tokushima 772-8601 (JP); ISHIDOU, Yoshitsugu, Higashiosaka-shi, Osaka 578-0925 (JP)
(74) Representative: Hoffmann Eitle
(86) International application number: PCT/JP2023/046789
(87) International publication number: WO 2024/143415

(57) **Abstract**

A medical cap includes a stopper which is arranged inside a tubular mouth portion that forms an opening and a case including a tubular inner wall which is arranged between the stopper and the mouth portion, a tubular outer wall which surrounds the inner wall via a tubular space that houses the mouth portion and an upper wall which is arranged above the mouth portion that is arranged at the tubular space. The stopper includes an internal portion which is surrounded by the inner wall and a lower portion which is arranged between the upper wall and the mouth portion that is arranged at the tubular space.

## Description

### Technical Field

The present invention relates to a medical cap which closes an opening, a medical container which has the medical cap, and a method for manufacturing the medical cap.

### Background Art

An opening of a medical container such as an infusion solution container, a blood collection tube, a vial, etc., may be closed by a cap having a rubber stopper. When a hollow needle is inserted into the rubber stopper, a liquid such as an infusion solution pours out through the needle from the medical container or pours into the medical container.

For example, where the medical container is an infusion solution container such as an infusion solution bag or an infusion solution bottle, an infusion solution inside the infusion solution container pours out from infusion solution container through a hollow needle which has penetrated through a rubber stopper. Where the medical container is a blood collection tube, the blood pours into the blood collection tube through the hollow needle which has penetrated through the rubber stopper. Where the medical container is a vial, a liquid medicine pours out from the vial through the hollow needle which has penetrated through the rubber stopper, or a liquid such as a solution pours into the vial.

Patent Literature 1 discloses a medical cap which is used in an infusion solution container, a blood collecting tube, a vial, etc. This medical cap has a supporting body, an elastic stopper body and an inner stopper. The supporting body is provided with an internal wall which surrounds and houses the elastic stopper body and an external wall which surrounds the internal wall. An annular wall of the inner stopper is arranged between the external wall and the internal wall. The internal wall and the external wall extend from a placing portion of the supporting body to an axial direction (a direction parallel to the center line of the supporting body) of the supporting body. The elastic stopper body is arranged inside a space which is formed by the internal wall, the external wall and the placing portion.

### Citation List

### Patent Literature

Patent Literature 1: Japanese Patent No. 5924767

### Summary of Invention

### Technical problem

In the medical cap of Patent Literature 1, when the annular wall of the inner stopper is arranged between the internal wall and the external wall, an upper surface of the annular wall faces the placing portion in the axial direction of the supporting body and is not in contact with the elastic stopper body. Therefore, there is a concern that a liquid such as an infusion solution may pass between the annular wall and the placing portion.

Thus, one object of the present invention is to provide a medical cap capable of preventing a decrease in airtightness. The other objects of the present invention are to provide a medical container which has the medical cap as well as a method for manufacturing the medical cap. Solution to Problem

A preferred embodiment of the present invention provides a medical cap which closes an opening through which a liquid passes, or the medical cap which has a stopper which is arranged inside a tubular mouth portion that forms the opening and a case including a tubular inner wall which is arranged between the stopper and the mouth portion, a tubular outer wall which surrounds the inner wall via a tubular space that houses the mouth portion and an upper wall which is arranged above the mouth portion that is arranged at the tubular space, in which the stopper includes an internal portion which is surrounded by the inner wall and a lower portion which is arranged between the upper wall and the mouth portion that is arranged at the tubular space.

Another preferred embodiment of the present invention provides a medical container which has a container main body including a tubular mouth portion which forms an opening through which a liquid passes and a housing portion which houses the liquid and the medical cap.

Still another preferred embodiment of the present invention provides a method for manufacturing a medical cap which closes an opening through which a liquid passes. The medical cap has a stopper which is arranged inside a tubular mouth portion that forms the opening and a case including a tubular inner wall which is arranged between the stopper and the mouth portion, a tubular outer wall which surrounds the inner wall via a tubular space that houses the mouth portion and an upper wall which is arranged above the mouth portion that is arranged at the tubular space. The stopper includes an internal portion which is surrounded by the inner wall and a lower portion which is arranged between the upper wall and the mouth portion that is arranged at the tubular space. The above method provides a method for manufacturing a medical cap including a step of arranging the case inside a mold and a step of forming the stopper by injecting a melted material of the stopper into a cavity that is formed by the case and the mold and cooling the material inside the cavity.

### Effects of Invention

According to the present invention, it is possible to provide a medical cap capable of preventing a decrease in airtightness.

### Brief Description of Drawings

[FIG. 1A] A front elevational view which shows one example of a medical container according to a preferred embodiment of the present invention.
[FIG. 1B] A front elevational view which shows another example of the medical container according to the preferred embodiment of the present invention.
[FIG. 2] A front elevational view of a medical cap and a mouth portion according to the preferred embodiment of the present invention.
[FIG. 3] A cross-sectional view which shows vertical cross sections of the medical cap and the mouth portion according to the preferred embodiment of the present invention.
[FIG. 4] A cross-sectional view which shows a vertical cross section of the medical cap before being combined with the mouth portion.
[FIG. 5] A plan view of the medical cap before being combined with the mouth portion.
[FIG. 6] A bottom view of the medical cap before being combined with the mouth portion.
[FIG. 7] A partially enlarged view of FIG. 6.
[FIG. 8] A partially enlarged view of FIG. 4.
[FIG. 9] A cross-sectional view which shows a vertical cross section of the medical cap which is cut in a cross section different from that of FIG. 8.
[FIG. 10] A cross-sectional view which shows vertical cross sections of the medical cap and the mouth portion before they are combined.
[FIG. 11] A cross-sectional view which shows vertical cross sections of the medical cap and the mouth portion which have been combined.
[FIG. 12] A brief cross-sectional view of a mold to manufacture the medical cap.
[FIG. 13] A cross-sectional view which shows an inner wall before deformation by being fastened by the mouth portion.
[FIG. 14] A cross-sectional view which shows the inner wall which has undergone deformation by being fastened by the mouth portion.
[FIG. 15A-B] Cross-sectional views which show changes before and after an internal contact portion of the mouth portion comes into contact with an external contact portion of the outer wall.
[FIG. 16] A cross-sectional view which shows vertical cross sections of a medical cap and a mouth portion according to another preferred embodiment of the present invention.
[FIG. 17] A cross-sectional view which shows vertical cross sections of a medical cap and a mouth portion according to still another preferred embodiment of the present invention. Description of Embodiments

Hereinafter, a detailed description of the preferred embodiments of the present invention will be given by referring to the attached drawings.

Hereinafter, a description will be given of a medical cap 2 and a medical container 1 which are in a reference posture. The reference posture is a posture in which a center line Cc of a case 11 is vertical and a surface 23u into which a needle is to be inserted is directed upward at a stopper 23. An axial direction of the case 11 is a direction along the center line Cc of the case 11 and corresponds to an up/down direction. A radial direction Dr of the case 11 is a direction orthogonal to the center line Cc of the case 11. A radial direction, a circumferential direction and an axial direction of a mouth portion 5 are respectively in agreement with the radial direction Dr, a circumferential direction Dc and the axial direction of the case 11. Therefore, hereinafter, expressions of the radial direction of the mouth portion 5, etc., will not be used, but expressions of the radial direction Dr of the case 11, etc., will be used.

In the following description, an upper end means a portion which is positioned highest at a certain member or a certain portion. In other words, the upper end corresponds to an uppermost end. The upper end may be one or more points or surfaces and may include one or more points and one or more surfaces. A definition of "end" is also applied to a term other than the upper end. For example, a lower end means a portion which is positioned lowest at a certain member or a certain portion. In the following description, internal means the side of the center line Cc of the case 11 or a center line Cm of the mouth portion 5 in relation to a reference, and external means the opposite side of the center line Cc of the case 11 or the center line Cm of the mouth portion 5 in relation to a reference.

First, a brief description will be given of the medical cap 2 and the medical container 1.

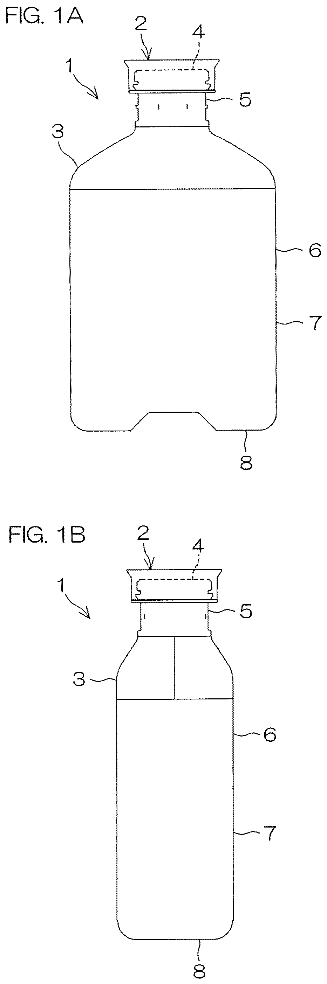

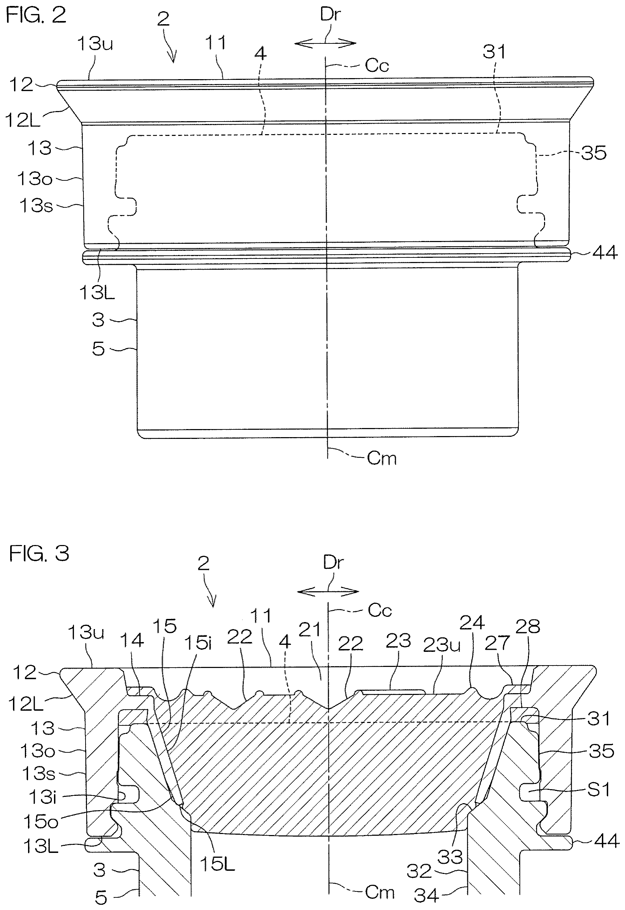

FIG. 1A is a front elevational view which shows one example of the medical container 1 according to a preferred embodiment of the present invention. FIG. 1B is a front elevational view which shows another example of the medical container 1 according to the preferred embodiment of the present invention. FIG. 2 is a front elevational view of the medical cap 2 and the mouth portion 5 according to the preferred embodiment of the present invention. FIG. 3 is a cross-sectional view which shows vertical cross sections of the medical cap 2 and the mouth portion 5 according to the preferred embodiment of the present invention.

As shown in FIG. 1A and FIG. 1B, the medical container 1 has a container main body 3 which houses a substance and the medical cap 2 which closes an opening 4 of the container main body 3 (refer to FIG. 3). The container main body 3 includes a housing portion 6 which houses a substance and a tubular mouth portion 5 which forms the opening 4.

A substance which passes through the opening 4 of the container main body 3 may be any one of a liquid, a solid, a semi-solid, or may be a substance other than the above. For example, a liquid which is to be administered to a person parenterally or a liquid which has been collected from a person parenterally may pass through the opening 4. The liquid which passes through the opening 4 may be a liquid (infusion solution or injection solution, etc.) flowing out from the container main body 3 or may be a liquid (blood, solution, etc.) entering the container main body 3. For example, where the container main body 3 houses a substance (solid injection, etc.) in a solid or a semi-solid state, a liquid such as a solution may be supplied to the container main body 3 via the opening 4. In this case, a substance inside the container main body 3 dissolves into a liquid, thereby producing, inside the container main body 3, the liquid such as an injection solution which is to be administered into a person.

The housing portion 6 of the container main body 3 includes a tubular body portion 7 and a bottom portion 8 which closes a bottom of the body portion 7. The mouth portion 5 extends upward from the body portion 7. The housing portion 6 may be a hard container which will not undergo or will not substantially undergo deformation when being pressed by the hand of a person or may be a soft container (bag, etc.) which will easily undergo deformation when being pressed by the hand of a person. FIG. 1A and FIG. 1B show the former example. The housing portion 6 shown in FIG. 1A and that shown in FIG. 1B are different from each other in thickness (area of horizontal cross section).

The container main body 3 is made of resin or glass. The container main body 3 may be a single member which is integrally formed or may be a member in which two or more components are connected. FIG. 1A and FIG. 1B each show an example in which the mouth portion 5 and the housing portion 6 are a different component and connected with each other. In this case, the mouth portion 5 may be made of the same material as the housing portion 6 or may be made of a material different from the housing portion 6. Hereinafter, a description will be given of an example in which the mouth portion 5 is made of a thermoplastic resin.

Where the mouth portion 5 and the housing portion 6 are a different component, the medical cap 2 may be combined with the mouth portion 5 before the mouth portion 5 and the housing portion 6 are connected or may be combined with the mouth portion 5 after the mouth portion 5 and the housing portion 6 have been connected. FIG. 2 shows the medical cap 2 which is combined with the mouth portion 5 before being connected with the housing portion 6. The medical cap 2 and the mouth portion 5 shown in FIG. 2 are a medical cap module which is one of the components of the medical container 1. The medical cap module is connected or coupled to another component of the medical container 1 such as the housing portion 6, thereby manufacturing the container main body 3 and the medical container 1.

The medical cap 2 is not a screw-type cap but a press-in type cap which is attached to the mouth portion 5 by being pressed to the mouth portion 5 without rotation. The medical cap 2 is combined with the mouth portion 5, by which the opening 4 of the mouth portion 5 is closed by the medical cap 2. Thereafter, a sterilization process is performed in which the medical cap module (medical cap 2 and mouth portion 5 which are combined with each other) or the medical cap 2 and the container main body 3 which are combined with each other are heated. Thereby, microorganisms such as bacteria found in the medical cap 2, etc., are killed or removed.

As shown in FIG. 3, the medical cap 2 is provided with the columnar stopper 23 which is arranged inside the mouth portion 5 and the cylindrical case 11 which houses and holds the stopper 23. The stopper 23 is attached to the mouth portion 5 together with the case 11. When the medical cap 2 is combined with the mouth portion 5, the stopper 23 and the case 11 undergo elastic deformation. FIG. 3 shows the stopper 23 and the case 11 which have undergone elastic deformation.

The stopper 23 is preferably a stopper which is made of rubber or elastomer but may be made of a material other than the above. Rubber is a substance which has properties that it deforms upon application of a force and soon assumes its original shape when the force is removed. The rubber may be a natural rubber or a thermosetting elastomer or may be a material other than the above. The elastomer may be a synthetic rubber or a thermoplastic elastomer or may be a material other than the above.

The stopper 23 may be made of any one of styrene-ethylene butylene-styrene (SEBS), styrene-ethylene propylene-styrene (SEPS), isoprene and butadiene or may be made of a material other than the above. The case 11 may be made of any one of polyolefin-based resin (polypropylene (PP), polyethylene (PE), etc.) and polyethylene-terephthalate (PET) or may be made of a material other than the above. That is, the case 11 may be made of a thermoplastic resin or may be made of a material other than the above.

Hereinafter, unless otherwise specified, a description will be given of the medical cap 2 before being combined with the mouth portion 5. First, the case 11 will be described and, thereafter, the stopper 23 will be described. Then, the medical cap 2 and the mouth portion 5 will be described. As for the case 11, first, the case 11 will be briefly described and, thereafter, the thin portion 18 and the thick portion 19 of the case 11 will be described.

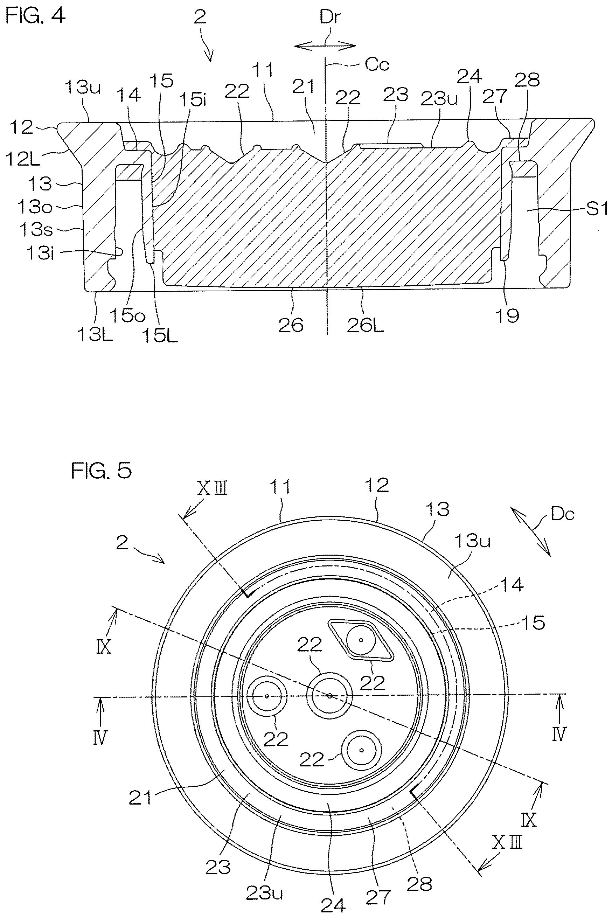

FIG. 4 is a cross-sectional view which shows a vertical cross section of the medical cap 2 before being combined with the mouth portion 5. FIG. 5 is a plan view of the medical cap 2 before being combined with the mouth portion 5. FIG. 4 shows a cross section along line IV-IV shown in FIG. 5.

As shown in FIG. 4, the case 11 includes a cylindrical inner wall 15 which surrounds the stopper 23, a cylindrical outer wall 13 which surrounds the inner wall 15 via a tubular space S1 at which the mouth portion 5 is arranged, and an annular upper wall 14 which extends to the outer wall 13 from the inner wall 15 above the tubular space S1. The inner wall 15 and the outer wall 13 are in a cylindrical shape extending up and down. The upper wall 14 is in a circular annular shape which continues over an entire circumference of the case 11. The inner wall 15, the outer wall 13 and the upper wall 14 are concentric. The center lines of the inner wall 15, the outer wall 13 and the upper wall 14 are arranged on the center line Cc of the case 11.

The inner wall 15 extends downward from the upper wall 14. An upper end of the inner wall 15 corresponds to a root of the inner wall 15. A lower end 15L of the inner wall 15 corresponds to a leading end of the inner wall 15. The upper end of the inner wall 15 constitutes an upper surface of the upper wall 14. An inner circumferential surface 15i of the inner wall 15 extends downward from an inner circumference of the upper surface of the upper wall 14. An outer circumferential surface 15o of the inner wall 15 extends downward from an inner circumference of a lower surface of the upper wall 14. The lower end 15L of the inner wall 15 is arranged lower than the lower surface of the upper wall 14.

The outer wall 13 extends upward and downward from the upper wall 14. An upper surface 13u of the outer wall 13 corresponds to an upper end of the outer wall 13. A lower surface 13L of the outer wall 13 corresponds to a lower end of the outer wall 13. The upper surface 13u of the outer wall 13 is arranged higher than the upper end of the inner wall 15 and the upper surface of the upper wall 14. The lower surface 13L of the outer wall 13 is arranged lower than the lower end 15L of the inner wall 15 and the lower surface of the upper wall 14. An inner circumferential surface 13i of the outer wall 13 extends downward from the upper surface 13u of the outer wall 13 to an outer circumference of the upper surface of the upper wall 14 and extends downward from an outer circumference of the lower surface of the upper wall 14 to the lower surface 13L of the outer wall 13.

The upper surface 13u of the outer wall 13 is positioned highest in the case 11. The upper surface 13u of the outer wall 13 corresponds to an upper surface of the case 11 and that of the medical cap 2. The upper surface 13u of the outer wall 13 also corresponds to an upper end of the case 11 and that of the medical cap 2. The lower surface 13L of the outer wall 13 is positioned lowest in the case 11. The lower surface 13L of the outer wall 13 corresponds to a lower surface of the case 11 and that of the medical cap 2. The lower surface 13L of the outer wall 13 also corresponds to a lower end of the case 11 and that of the medical cap 2.

The upper surface 13u of the outer wall 13 is arranged higher than any portion of the stopper 23. The stopper 23 and the case 11 form a disk-shaped recessed portion 21 which is recessed downward from the upper surface 13u of the outer wall 13. An upper surface 23u of the stopper 23, namely, an upper surface of an internal portion 24 and an upper surface of an upper portion 27 which are to be described later, corresponds to a bottom surface of the disk-shaped recessed portion 21. As shown in FIG. 5, the upper surface 23u of the stopper 23 is visible because it is not covered with the case 11 when the medical cap 2 is viewed from above.

As shown in FIG. 4, the case 11 includes an annular upper flange 12 which is formed by the upper surface 13u of the outer wall 13 and an outer circumferential surface 13o of the outer wall 13. A vertical cross section of the upper flange 12 at each position of the case 11 in the circumferential direction Dc may be in a rectangular shape, a square shape, a triangular shape or a semi-circular shape or may be any combination of two or more of them. FIG. 4 shows an example in which the vertical cross section of the upper flange 12 is in a triangular shape. In this case, the upper flange 12 includes a horizontal upper surface corresponding to a portion of the upper surface 13u of the outer wall 13 and an inclined lower surface 12L corresponding to a portion of the outer circumferential surface 13o of the outer wall 13. The lower surface 12L of the upper flange 12 extends obliquely upward toward an outer end of the upper flange 12.

The outer circumferential surface 13o of the outer wall 13 includes a cylindrical straight portion 13s which has a linear vertical cross section, in addition to the lower surface 12L of the upper flange 12. The straight portion 13s extends downward from the upper flange 12. The upper flange 12 protrudes outside from the straight portion 13s. The straight portion 13s is longer than the upper flange 12 in an up/down direction. A protrusion amount of the upper flange 12, that is, a distance of the case 11 in the radial direction Dr from the straight portion 13s to the outer end of the upper flange 12 is shorter than a length of the upper flange 12 in the up/down direction, that is, a distance from an upper end of the straight portion 13s to the upper surface 13u of the outer wall 13 in the up/down direction. A length of the straight portion 13s in the up/down direction may be not more than the length of the upper flange 12 in the up/down direction. The protrusion amount of the upper flange 12 may be not less than the length of the upper flange 12 in the up/down direction.

The outer circumferential surface 13o of the outer wall 13 corresponds to an outer circumferential surface of the case 11 and that of the medical cap 2. The outer circumferential surface 13o of the outer wall 13 is pinched with fingers of a person who handles the medical cap 2 or the medical container 1. An outer diameter of the case 11 is largest at the upper flange 12. The upper flange 12 is caught with the fingers of a person and regulates movements of the medical cap 2 in response to the fingers of a person. It is, thereby, possible to increase the stability of the medical cap 2 with regard to the fingers of a person who handles the medical cap 2 or the medical container 1.

The inner wall 15, the outer wall 13 and the upper wall 14 form the tubular space S1 at which the mouth portion 5 is arranged. The tubular space S1 is a cylindrical space between the inner wall 15 and the outer wall 13. The tubular space S1 is concentric with the inner wall 15 and the outer wall 13. The upper wall 14 is arranged above a space between the inner wall 15 and the outer wall 13 and closes the space. The upper wall 14 forms an upper end of the tubular space S1. The tubular space S1 is separated from an internal space, an external space and an upper space of the tubular space S1 by the inner wall 15, the outer wall 13 and the upper wall 14. On the other hand, the tubular space S1 is opened downward and continues up and down to a lower space of the tubular space S1.

Next, a description will be given of a thin portion 18 and a thick portion 19 of the case 11.

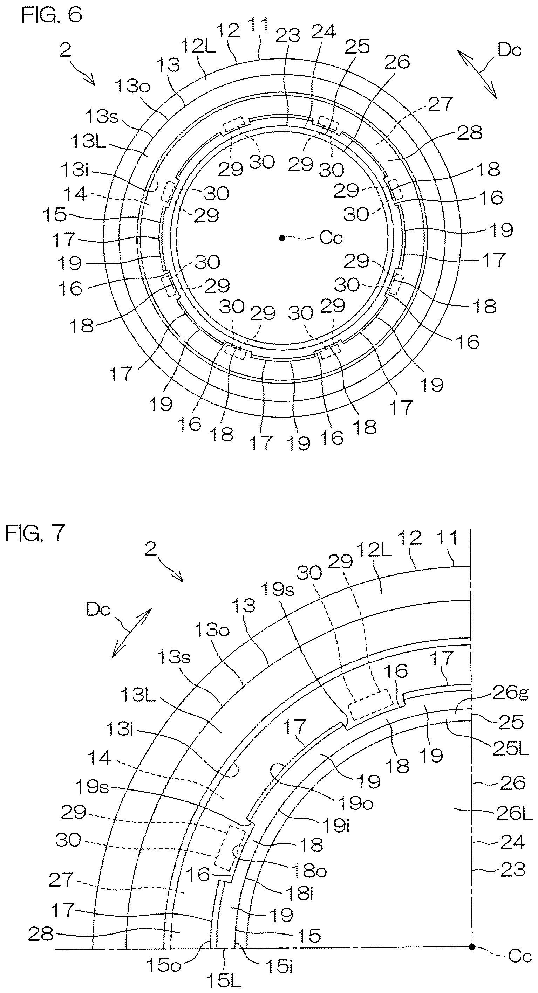

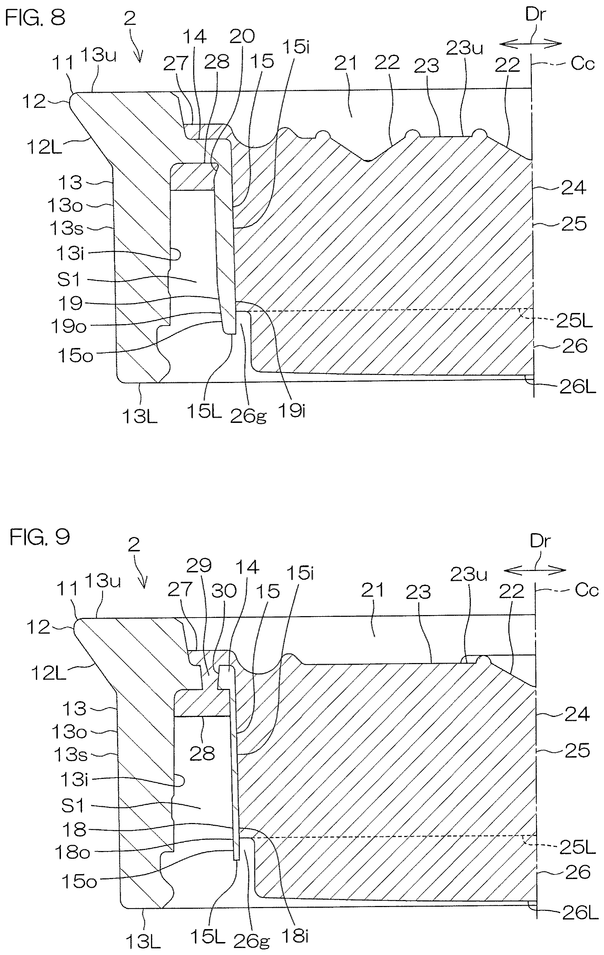

FIG. 6 is a bottom view of the medical cap 2 before being combined with the mouth portion 5. FIG. 7 is a partially enlarged view of FIG. 6. FIG. 8 is a partially enlarged view of FIG. 4. FIG. 9 is a cross-sectional view which shows a vertical cross section of the medical cap 2 which is cut by a cross section different from that of FIG. 8. FIG. 9 shows a cross section along line IX-IX shown in FIG. 5.

As shown in FIG. 6, the inner wall 15 includes the thin portion 18 and the thick portion 19 different from each other in thickness of the case 11 in the radial direction Dr. FIG. 6 shows an example in which the plurality of thin portions 18 and the plurality of thick portions 19 are disposed. In this example, the eight thin portions 18 and the eight thick portions 19 are arranged in the circumferential direction Dc of the case 11. The numbers of the thin portions 18 and the thick portions 19 which are disposed in the inner wall 15 may be one each.

As shown in FIG. 6, when the medical cap 2 is viewed from below, the thin portion 18 and the thick portion 19 are each in a circular arc shape. The thin portion 18 and the thick portion 19 extend along a circle, the center of which is arranged on the center line Cc of the case 11. The thin portion 18 and the thick portion 19 continue in the circumferential direction Dc of the case 11. The thick portion 19 is longer than the thin portion 18 in the circumferential direction Dc of the case 11. The thick portion 19 is thicker than the thin portion 18 in the radial direction Dr of the case 11. A width of the thick portion 19 which corresponds to a length of the thick portion 19 in the circumferential direction Dc of the case 11 may be not more than a width of the thin portion 18 which corresponds to a length of the thin portion 18 in the circumferential direction Dc of the case 11. The width of the thick portion 19 may be fixed from an upper end of the thick portion 19 to a lower end of the thick portion 19 or may be changed. This also applies to the width of the thin portion 18.

The thin portion 18 and the thick portion 19 which are different from each other in thickness in the radial direction Dr of the case 11 are arranged in the circumferential direction Dc of the case 11. Therefore, at least one of the inner circumferential surface 15i and the outer circumferential surface 15o of the inner wall 15 is a cylindrical uneven surface in which a distance from the center line Cc of the case 11 is alternately increased and decreased in a repeated manner according to a position of the case 11 in the circumferential direction Dc. FIG. 6 shows an example in which the outer circumferential surface 15o of the inner wall 15 is a cylindrical uneven surface and the inner circumferential surface 15i of the inner wall 15 is a cylindrical surface. Both of the inner circumferential surface 15i and the outer circumferential surface 15o of the inner wall 15 may be a cylindrical uneven surface or only the inner circumferential surface 15i of the inner wall 15 may be a cylindrical uneven surface. In the case of the example shown in FIG. 6, a horizontal cross section of the inner circumferential surface 15i of the inner wall 15 is circular.

As shown in FIG. 7, the thin portion 18 forms an external recessed portion 16 which is recessed internally on the outer circumferential surface 15o of the inner wall 15. The thick portion 19A forms an external raised portion 17 which protrudes externally on the outer circumferential surface 15o of the inner wall 15. The thin portion 18 includes an inner surface 18i and an outer surface 18o which are in a circular-arc shape. Similarly, the thick portion 19 includes an inner surface 19i and an outer surface 19o which are in a circular-arc shape. The thick portion 19 further includes two side surfaces 19s which extend from the inner surface 19i of the thick portion 19 to the inner surface 18i of the thin portion 18 or from the outer surface 19o of the thick portion 19 to the outer surface 18o of the thin portion 18. In the example shown in FIG. 7, the side surface 19s of the thick portion 19 extends from the outer surface 19o of the thick portion 19 to the outer surface 18o of the thin portion 18.

The length of the thick portion 19 in an up/down direction is equal to the length of the thin portion 18 in an up/down direction. The upper end of the thick portion 19 is arranged at a height equal to that of an upper end of the thin portion 18. The lower end of the thick portion 19 is arranged at a height equal to that of a lower end of the thin portion 18. The upper end of the inner wall 15 is constituted of the upper ends of all the thick portions 19 and the upper ends of all the thin portions 18. Similarly, the lower end 15L of the inner wall 15 is constituted of the lower ends of all the thick portions 19 and the lower ends of all the thin portions 18. The lower end of the thick portion 19 may be arranged higher or lower than the lower end of the thin portion 18.

If assuming the same position in an up/down direction, the thickness of the thin portion 18 is fixed or substantially fixed, regardless of a position of the case 11 in the circumferential direction Dc. Similarly, if assuming the same position in the up/down direction, the thickness of the thick portion 19 is fixed or substantially fixed, regardless of a position of the case 11 in the circumferential direction Dc. The thickness of the thin portion 18 may be fixed from the upper end of the thin portion 18 to the lower end of the thin portion 18 or may be changed in a stepwise manner or continuously according to a position in the up/down direction. FIG. 9 shows the former example. Similarly, the thickness of the thick portion 19 may be fixed from the upper end of the thick portion 19 to the lower end of the thick portion 19 or may be changed in a stepwise manner or continuously according to a position in the up/down direction. FIG. 8 shows the latter example.

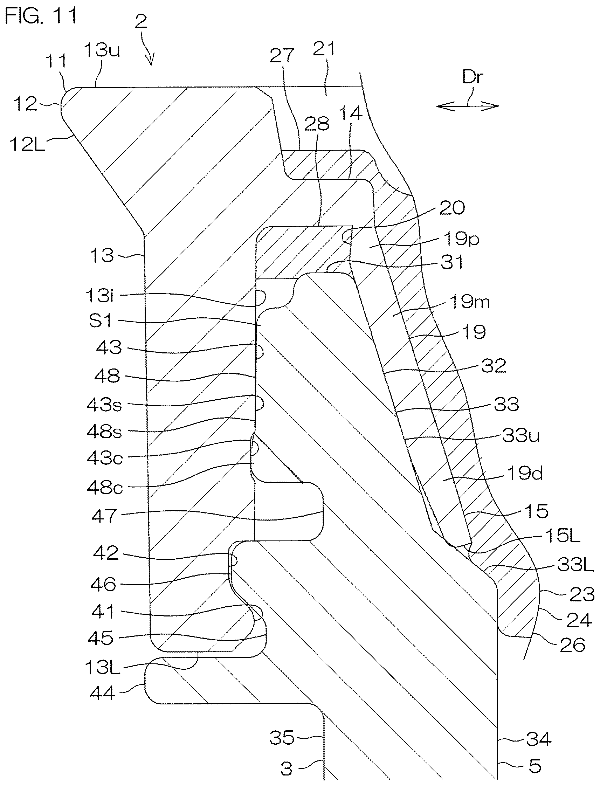

In the example shown in FIG. 8, the thick portion 19 is decreased in thickness in the vicinity of the upper end of the thick portion 19 and decreased in the vicinity of the lower end of the thick portion 19. In this example, the thick portion 19 includes a root portion 19p (refer to FIG. 11) which is continuously decreased in thickness, as it approaches the upper end of the thick portion 19, an intermediate portion 19m (refer to FIG. 11) which is fixed or substantially fixed in thickness, and a leading end portion 19d (refer to FIG. 11) which is continuously decreased in thickness, as it approaches the lower end of the thick portion 19.

The intermediate portion 19m extends downward from a lower end of the root portion 19p to an upper end of the leading end portion 19d. The intermediate portion 19m is longer than the root portion 19p in an up/down direction and longer than the leading end portion 19d in the up/down direction. The leading end portion 19d is longer than the root portion 19p in the up/down direction. A length of the intermediate portion 19m in the up/down direction may be not more than a length of the root portion 19p in the up/down direction or may be not more than a length of the leading end portion 19d in the up/down direction. The length of the leading end portion 19d in the up/down direction may be not more than the length of the root portion 19p in the up/down direction.

As shown in FIG. 8, an inner surface and an outer surface of the intermediate portion 19m are vertical or substantially vertical. An inner surface of the root portion 19p and an inner surface of the leading end portion 19d are also vertical or substantially vertical. A vertical cross section of the inner surface of the root portion 19p, a vertical cross section of the inner surface of the intermediate portion 19m and a vertical cross section of the inner surface of the leading end portion 19d are arranged on one straight line. An outer surface of the root portion 19p extends obliquely upward from the outer surface of the intermediate portion 19m toward the center line Cc of the case 11. An outer surface of the leading end portion 19d extends obliquely downward from the outer surface of the intermediate portion 19m to the center line Cc of the case 11.

The outer surface of the root portion 19p and the lower surface of the upper wall 14 form a root-side recessed portion 20 which is recessed internally. FIG. 8 shows an example in which the root-side recessed portion 20 is recessed obliquely upward toward the center line Cc of the case 11. In this example, the root-side recessed portion 20 is occupied by a portion (portion of lower portion 28 which will be described later) of the stopper 23. The root-side recessed portion 20 is formed for each of the thick portions 19. Therefore, the plurality of thick portions 19 and the plurality of upper walls 14 form the plurality of root-side recessed portions 20 which are arranged at intervals in the circumferential direction Dc of the case 11.

As described above, the thin portion 18 is fixed in thickness from the upper end of the thin portion 18 to the lower end of the thin portion 18. The thickness of the thin portion 18 serves both as a maximum value of the thickness of the thin portion 18 and as a minimum value of the thickness of the thin portion 18. The thickness of the thick portion 19 is largest at the intermediate portion 19m and smallest at the root portion 19p. The thickness of the thick portion 19 may be smallest at the leading end portion 19d. A maximum value of the thickness of the thick portion 19 is larger than the maximum value of the thickness of the thin portion 18. A minimum value of the thickness of the thick portion 19 is larger than the maximum value of the thickness of the thin portion 18. The maximum value of the thickness of the thin portion 18 may be not less than the minimum value of the thickness of the thick portion 19.

Next, a description will be given of the stopper 23.

As shown in FIG. 8 and FIG. 9, the stopper 23 includes an internal portion 24 which is surrounded by the inner wall 15, an upper portion 27 which is arranged above the upper wall 14, a lower portion 28 which is arranged below the upper wall 14, and one or more connection portions 29 which connect the lower portion 28 to the internal portion 24.

The stopper 23 is a single member which is formed integrally. The internal portion 24 is integral with each of the upper portion 27, the lower portion 28 and the connection portion 29. The internal portion 24 is in a columnar shape which extends up and down. The upper portion 27 and the lower portion 28 are in a circular annular shape which continues over an entire circumference of the stopper 23. The internal portion 24, the upper portion 27 and the lower portion 28 are concentric. The center lines of the internal portion 24, the upper portion 27 and the lower portion 28 are arranged on the center line Cc of the case 11.

An upper surface of the internal portion 24 is a surface into which a hollow needle is inserted. A lower surface of the internal portion 24 is a surface at which the needle that has been inserted into the upper surface of the internal portion 24 sticks out. FIG. 8 and FIG. 9 show an example in which the upper surface of the internal portion 24 is an uneven surface on which one or more depressions 22 into which the hollow needle is to be inserted are disposed. In this example, one depression 22 is arranged at the central portion of the upper surface of the internal portion 24 and the remaining three depressions 22 are arranged at an equal interval around the depression 22 at the center (refer also to FIG. 5). The upper surface of the internal portion 24 may be a smooth flat surface or a curved surface which is free of the depression 22. The lower surface of the internal portion 24 may be a smooth flat surface or a curved surface which is free of the depression 22 or may be an uneven surface having undulations up and down.

The internal portion 24 is longer than the inner wall 15 in an up/down direction. An upper end of the internal portion 24 is arranged higher than the upper end of the inner wall 15. A lower end of the internal portion 24 is arranged lower than the lower end 15L of the inner wall 15. The lower end of the internal portion 24 corresponds to a lower end of the stopper 23. FIG. 8 and FIG. 9 show an example in which the lower surface of the internal portion 24 is in a spherical-cap shape which is raised downward. In this example, a lower end of the lower surface of the internal portion 24 corresponds to the lower end of the internal portion 24. Any portion of the lower surface of the internal portion 24 is arranged lower than the lower end 15L of the inner wall 15.

The internal portion 24 may be fixed or substantially fixed in outer diameter from the upper end of the internal portion 24 to the lower end of the internal portion 24 or may be changed in outer diameter continuously or in a stepwise manner, as it approaches the lower end of the internal portion 24. FIG. 8 and FIG. 9 show an example in which the internal portion 24 is decreased in outer diameter in a stepwise manner, as it approaches the lower end of the internal portion 24. In this example, the internal portion 24 includes a large diameter portion 25 which is surrounded by the inner wall 15 and a small diameter portion 26 which is smaller in outer diameter than the large diameter portion 25.

The small diameter portion 26 is concentric with the large diameter portion 25. The small diameter portion 26 extends downward from the large diameter portion 25. The small diameter portion 26 is shorter than the large diameter portion 25 in an up/down direction. A length of the small diameter portion 26 in the up/down direction may be not less than a length of the large diameter portion 25 in the up/down direction. The small diameter portion 26 is fixed or substantially fixed in outer diameter from an upper end of the small diameter portion 26 to a lower end 26L of the small diameter portion 26. Similarly, the large diameter portion 25 is fixed or substantially fixed in outer diameter from an upper end of the large diameter portion 25 to a lower end 25L of the large diameter portion 25. The outer diameter of the internal portion 24 is smallest at the small diameter portion 26.

The upper end of the large diameter portion 25 corresponds to the upper end of the internal portion 24. The lower end 26L of the small diameter portion 26 corresponds to the lower end of the internal portion 24. The lower end 26L of the small diameter portion 26 also corresponds to the lower end of the stopper 23. The small diameter portion 26 protrudes downward from the lower end 15L of the inner wall 15. A lower end portion of the stopper 23 is constituted of the small diameter portion 26. The small diameter portion 26 is a portion which is in contact with an inner circumferential surface 32 of the mouth portion 5 over an entire circumference of the mouth portion 5, when the medical cap 2 is combined with the mouth portion 5 (refer to FIG. 3).

An outer circumferential surface of the large diameter portion 25 is in contact with the inner circumferential surface 15i of the inner wall 15. An outer circumferential surface of the small diameter portion 26 is separated from the inner circumferential surface 15i of the inner wall 15 over an entire circumference of the inner wall 15. An outer diameter of the small diameter portion 26 is smaller than an inner diameter of the inner wall 15. The lower end 15L of the inner wall 15 is arranged lower than the lower end 25L of the large diameter portion 25 which corresponds to a lower surface of the large diameter portion 25. The lower end 15L of the inner wall 15 is arranged higher than the lower end 26L of the small diameter portion 26. The lower end 15L of the inner wall 15 surrounds an entire circumference of the small diameter portion 26 at an interval in the radial direction Dr. The inner circumferential surface 15i of the inner wall 15 and the outer circumferential surface of the small diameter portion 26 form an annular downward groove 26g which is recessed upward from the lower end 15L of the inner wall 15 toward the lower surface of the large diameter portion 25.

A width of the downward groove 26g is a distance of the case 11 in the radial direction Dr from the outer circumferential surface of the small diameter portion 26 to the inner circumferential surface 15i of the inner wall 15. A depth of the downward groove 26g is a distance from the lower end 15L of the inner wall 15 to the lower surface of the large diameter portion 25 in an up/down direction. The width of the downward groove 26g is shorter than the depth of the downward groove 26g. The depth of the downward groove 26g is shorter than a distance from the lower end 15L of the inner wall 15 to the lower end 26L of the small diameter portion 26 in the up/down direction. The width of the downward groove 26g may be not less than the depth of the downward groove 26g. The depth of the downward groove 26g may be not less than the distance from the lower end 15L of the inner wall 15 to the lower end 26L of the small diameter portion 26 in the up/down direction.

The upper portion 27 extends from the internal portion 24 up to a position above the upper wall 14. FIG. 8 and FIG. 9 show an example in which the upper portion 27 extends obliquely externally from the upper surface of the internal portion 24 and, thereafter, extends horizontally to the inner circumferential surface 13i of the outer wall 13. The upper portion 27 may extend horizontally from the internal portion 24 to the inner circumference surface 13i of the outer wall 13 or may have a portion which extends upward so as to move away from the internal portion 24. The upper portion 27 may extend upward or outward not from the upper surface of the internal portion 24 but from the outer circumferential surface of the internal portion 24. An upper end of the upper portion 27 may be arranged at a height equal to that of the upper end of the internal portion 24 or may be arranged higher or lower than the upper end of the internal portion 24.

An upper surface and a lower surface of the upper portion 27 are in a circular annular shape which continues over an entire circumference of the stopper 23. At least one of the upper surface and the lower surface of the upper portion 27 may be a flat surface or may be a curved surface having undulations up and down. FIG. 8 and FIG. 9 show an example in which each of the upper surface and the lower surface of the upper portion 27 is a horizontally flat surface. The upper surface of the upper portion 27 is arranged lower than the upper surface 13u of the outer wall 13. The lower surface of the upper portion 27 is in contact with the upper surface of the upper wall 14. An outer circumferential surface of the upper portion 27 is in contact with the inner circumferential surface 13i of the outer wall 13.

A thickness of the upper portion 27 is a distance from the lower surface of the upper portion 27 to the upper surface of the upper portion 27 in an up/down direction. A thickness of the upper wall 14 is a distance from the lower surface of the upper wall 14 to the upper surface of the upper wall 14 in the up/down direction. A width of the upper portion 27 is a distance of the case 11 in the radial direction Dr from an inner circumference of the upper surface of the upper wall 14 to the outer circumferential surface of the upper portion 27. A width of the upper surface 13u of the outer wall 13 is a distance of the case 11 in the radial direction Dr from an inner circumference of the upper surface 13u of the outer wall 13 to an outer circumference of the upper surface 13u of the outer wall 13. The thickness of the upper portion 27 is shorter than the thickness of the upper wall 14. The width of the upper portion 27 is longer than the thickness of the upper portion 27 and shorter than the width of the upper surface 13u of the outer wall 13. The thickness of the upper portion 27 may be not less than the thickness of the upper wall 14. The width of the upper portion 27 may be not more than the thickness of the upper portion 27 or may be not less than the width of the upper surface 13u of the outer wall 13.

The lower portion 28 is arranged between the inner wall 15 and the outer wall 13. An upper surface of the lower portion 28 is in contact with the upper wall 14. An inner circumferential surface of the lower portion 28 is in contact with the inner wall 15. An outer circumference surface of the lower portion 28 is in contact with the outer wall 13. A lower surface of the lower portion 28 is arranged above the mouth portion 5 which is arranged at the tubular space S1. The upper surface and the lower surface of the lower portion 28 are in a circular annular shape which continues over an entire circumference of the stopper 23. At least one of the upper surface and the lower surface of the lower portion 28 may be a flat surface or may be a curved surface having undulations up and down. FIG. 8 and FIG. 9 show an example in which each of the upper surface and the lower surface of the lower portion 28 is a horizontally flat surface.

An inner diameter of the lower portion 28 is smaller than an outer diameter of the upper portion 27. An outer diameter of the lower portion 28 is larger than the outer diameter of the upper portion 27. Therefore, the lower portion 28 is arranged below the upper wall 14 so that a portion of the lower portion 28 will be positioned directly under the upper portion 27. The inner diameter of the lower portion 28 may be not less than the outer diameter of the upper portion 27. The outer diameter of the lower portion 28 may be not more than the outer diameter of the upper portion 27. The lower portion 28 may be arranged in its entirety directly under the upper portion 27 or may be arranged inside or outside the upper portion 27.

A thickness of the lower portion 28 is a distance from the lower surface of the lower portion 28 to the upper surface of the lower portion 28 in an up/down direction. A width of the lower portion 28 is a distance of the case 11 in the radial direction Dr from the inner circumferential surface of the lower portion 28 to the outer circumferential surface of the lower portion 28. The thickness of the lower portion 28 is longer than the thickness of the upper portion 27 and longer than the thickness of the upper wall 14. The thickness of the lower portion 28 is shorter than the width of the lower portion 28. The width of the lower portion 28 is shorter than a width of the upper surface 13u of the outer wall 13. The thickness of the lower portion 28 may be not less than the width of the lower portion 28 or may be not more than the thickness of the upper wall 14. The thickness of the lower portion 28 may be not more than the thickness of the upper portion 27. The width of the lower portion 28 may be not less than the width of the upper surface 13u of the outer wall 13.

As described above, the stopper 23 includes one or more connection portions 29 which connect the lower portion 28 to the internal portion 24. FIG. 7 and FIG. 9 show an example in which the plurality of connection portions 29 are each filled into each of a plurality of through holes 30 which penetrate up and down through the upper wall 14. The number of the connection portions 29 disposed in the stopper 23 may be one. The through hole 30 may penetrate through a portion of the case 11 other than the upper wall 14 such as the inner wall 15.

FIG. 6 shows an example in which the plurality of connection portions 29 are arranged at an equal interval in the circumferential direction Dc of the case 11. In this example, an interval between two connection portions 29 which are closest to the circumferential direction Dc of the case 11 in relation to the circumferential direction Dc of the case 11 (hereinafter, also referred to as "interval between two connection portions 29") is longer than a length of the connection portion 29 in the circumferential direction Dc of the case 11. The plurality of connection portions 29 may be arranged at an unequal interval in the circumferential direction Dc of the case 11. An interval between two connection portions 29 may be made not more than the length of the connection portion 29 in the circumferential direction Dc of the case 11.

As shown in FIG. 9, the connection portion 29 is arranged between the upper portion 27 and the lower portion 28. When the medical cap 2 is viewed from above, the connection portion 29 overlaps in its entirety with the upper portion 27 and is hidden by the upper portion 27. The connection portion 29 extends downward from the lower surface of the upper portion 27 to the upper surface of the lower portion 28. The connection portion 29 connects the lower portion 28 to the upper portion 27. Therefore, the lower portion 28 is connected to the internal portion 24 via the connection portion 29 and the upper portion 27.

The connection portion 29 occupies an entirety or a substantial entirety of the through hole 30. An outer circumferential surface of the connection portion 29 is in contact with an inner circumferential surface of the through hole 30. A shape of a horizontal cross section of the connection portion 29 is equal or substantially equal to a shape of a horizontal cross section of the through hole 30. The horizontal cross section of the connection portion 29 may be circular, oval or polygonal or may be in a shape other than the above. The horizontal cross section of the connection portion 29 may be decreased in area, as it approaches the lower portion 28, or may be fixed in area from the upper portion 27 to the lower portion 28. FIG. 9 shows the former example.

The length of the connection portion 29 in the circumferential direction Dc of the case 11 is longer than a length of the connection portion 29 in an up/down direction. The length of the connection portion 29 in the circumferential direction Dc of the case 11 is longer than a length of the connection portion 29 in the radial direction Dr of the case 11. The length of the connection portion 29 in the up/down direction is longer than the length of the connection portion 29 in the radial direction Dr of the case 11. The length of the connection portion 29 in the circumferential direction Dc of the case 11 may be not more than the length of the connection portion 29 in the up/down direction or may be not more than the length of the connection portion 29 in the radial direction Dr of the case 11. The length of the connection portion 29 in the up/down direction may be not more than the length of the connection portion 29 in the radial direction Dr of the case 11.

As shown in FIG. 7, the outer circumferential surface 15o of the inner wall 15 forms the external raised portion 17 which protrudes in the radial direction Dr of the case 11 at a position of the thick portion 19 and the external recessed portion 16 which is recessed in the radial direction Dr of the case 11 at a position of the thin portion 18. The through hole 30 and the connection portion 29 are arranged outside the thin portion 18. A length of the through hole 30 and that of the connection portion 29 in the circumferential direction Dc of the case 11 are shorter than the length of the thin portion 18 in the circumferential direction Dc of the case 11. The through hole 30 and the connection portion 29 are arranged between the two thick portions 19 closest to each other in the circumferential direction Dc of the case 11. Therefore, when the medical cap 2 is viewed from below, portions of the through hole 30 and the connection portion 29 are arranged inside the external recessed portion 16.

Next, a description will be given of the medical cap 2 and the mouth portion 5.

Hereinafter, unless otherwise specified, a description will be given of the medical cap 2 and the mouth portion 5 before they are combined.

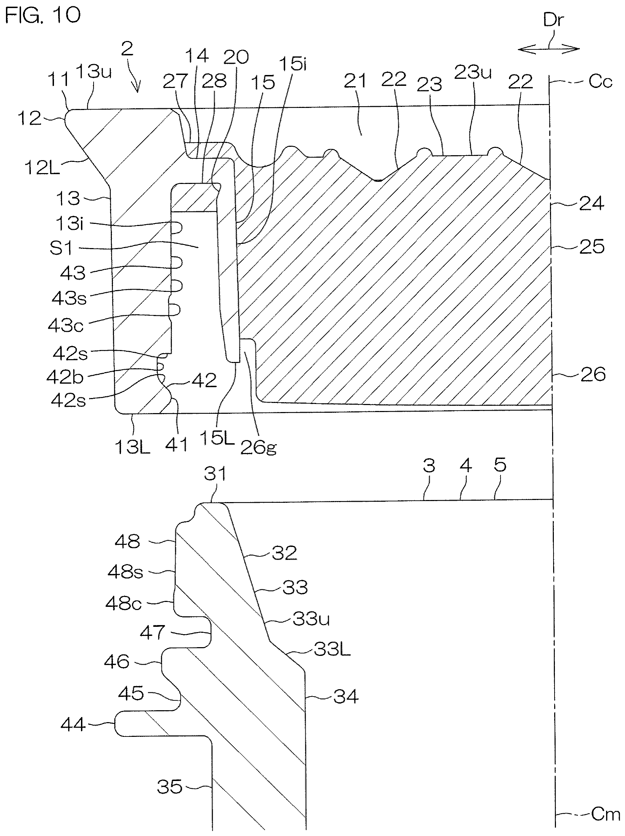

FIG. 10 is a cross-sectional view which shows the vertical cross sections of the medical cap 2 and the mouth portion 5 before they are combined. FIG. 11 is a cross-sectional view which shows the vertical cross sections of the medical cap 2 and the mouth portion 5 which have been combined.

As shown in FIG. 10, the mouth portion 5 includes an annular leading end surface 31 on which the opening 4 is formed, a cylindrical inner circumferential surface 32 which extends downward from an inner circumference of the leading end surface 31 and a cylindrical outer circumferential surface 35 which extends downward from an outer circumference of the leading end surface 31. The opening 4 is formed by the inner circumference of the leading end surface 31. The inner circumferential surface 32 forms a flow channel which guides a liquid which is to pass or has passed through the opening 4.

The inner circumferential surface 32 of the mouth portion 5 includes a cylindrical tapered portion 33 which extends downward from the opening 4 of the mouth portion 5 and a cylindrical straight portion 34 which extends downward from the tapered portion 33. The tapered portion 33 is made narrow as it moves away downward from the opening 4. A taper angle (angle in relation to vertical straight line) of the tapered portion 33 may be fixed from the opening 4 to the straight portion 34 or may be changed in a stepwise manner or continuously. FIG. 10 shows an example in which the tapered portion 33 is increased in taper angle only by one degree in a stepwise manner as it moves away downward from the opening 4.

In the example shown in FIG. 10, the tapered portion 33 includes a cylindrical upper tapered portion 33u which is made narrow as it moves away downward from the opening 4 and a cylindrical lower tapered portion 33L which is made narrow as it moves away downward from the upper tapered portion 33u. The upper tapered portion 33u extends downward from the opening 4. The lower tapered portion 33L extends downward from the upper tapered portion 33u. The straight portion 34 extends downward from the lower tapered portion 33L. A taper angle of the upper tapered portion 33u is smaller than a taper angle of the lower tapered portion 33L. The taper angle of the upper tapered portion 33u may be larger than the taper angle of the lower tapered portion 33L.

An inner diameter of the tapered portion 33 is largest at the upper end of the mouth portion 5 which corresponds to an upper end of the tapered portion 33 and smallest at a lower end of the lower tapered portion 33L which corresponds to a lower end of the tapered portion 33. An outer diameter of the lower end 15L of the inner wall 15 is smaller than a maximum value of the inner diameter of the tapered portion 33 and larger than a minimum value of the inner diameter of the tapered portion 33. Similarly, the outer diameter of the small diameter portion 26 which corresponds to the lower end portion of the stopper 23 is smaller than the maximum value of the inner diameter of the tapered portion 33 and larger than the minimum value of the inner diameter of the tapered portion 33. Therefore, when the medical cap 2 is combined with the mouth portion 5, the inner wall 15 is press-fitted into the mouth portion 5 or the mouth portion 5 is press-fitted into the inner wall 15. Thereby, the inner wall 15 and the stopper 23 are fastened by the mouth portion 5 and undergo elastic deformation.

When a hollow needle is inserted into the stopper 23 which has been fastened inward and undergone elastic deformation, a state that the stopper 23 is firmly attached to an outer circumferential surface of the needle is kept by recovery of the stopper 23. It is, thereby, possible to seal more reliably a clearance between the outer circumferential surface of the needle and the stopper 23 into which the needle has been inserted. In addition, the needle which has been inserted into the stopper 23 can be fastened by the stopper 23, by which a position and a posture of the needle in relation to the stopper 23 can be made more stable. Further, a hole of the stopper 23 made when the needle has been inserted into the stopper 23 is closed naturally by recovery of the stopper 23 when the needle is pulled out. Therefore, it is possible to prevent leakage of a liquid, etc., or contamination by foreign matter through this hole.

When the medical cap 2 is combined with the mouth portion 5, the outer circumferential surface 15o of the inner wall 15 comes into contact with the inner circumferential surface 32 of the mouth portion 5. The internal portion 24 of the stopper 23 comes into contact with the inner circumferential surface 32 of the mouth portion 5 over an entire circumference of the mouth portion 5 below the inner wall 15, and the lower portion 28 of the stopper 23 comes into contact with the leading end surface 31 of the mouth portion 5 over an entire circumference of the mouth portion 5. As will be described later, a lower raised portion 41 of the outer wall 13 is fitted into a lower recessed portion 45 of the mouth portion 5, and an upper raised portion 46 of the mouth portion 5 is fitted into an upper recessed portion 42 of the outer wall 13. Further, when a sterilization process to heat the medical cap 2 and the mouth portion 5 which have been combined is performed, an internal contact portion 48 of the mouth portion 5 comes into contact with an external contact portion 43 of the outer wall 13. FIG. 11 shows the medical cap 2 and the mouth portion 5 which have been subjected to the sterilization process.

As shown in FIG. 10 and FIG. 11, the outer wall 13 includes the upper recessed portion 42 which houses the upper raised portion 46 of the mouth portion 5 when the medical cap 2 and the mouth portion 5 are combined, and the lower raised portion 41 which is housed at the lower recessed portion 45 of the mouth portion 5 when the medical cap 2 and the mouth portion 5 are combined. In addition to the upper raised portion 46 and the lower recessed portion 45, the mouth portion 5 includes an annular neck flange 44 which is arranged below the outer wall 13 when the medical cap 2 and the mouth portion 5 are combined.

The lower raised portion 41 of the outer wall 13 continues up and down to the upper recessed portion 42 of the outer wall 13. The upper recessed portion 42 is recessed from the inner circumferential surface 13i of the outer wall 13. The upper recessed portion 42 is constituted of a bottom surface 42b which is positioned further outside than the inner circumferential surface 13i of the outer wall 13 and two side surfaces 42s which extend to the inner circumferential surface 13i of the outer wall 13 from an upper end and a lower end of the bottom surface 42b. The side surface 42s (lower one) of the upper recessed portion 42 is a portion of an outer surface of the lower raised portion 41 of the outer wall 13. The outer surface of the lower raised portion 41 extends internally from the bottom surface 42b of the upper recessed portion 42 and also extends internally from the lower surface 13L of the outer wall 13.

The upper recessed portion 42 and the lower raised portion 41 of the outer wall 13 continue over an entire circumference of the case 11. The upper raised portion 46 and the lower recessed portion 45 of the mouth portion 5 continue over an entire circumference of the mouth portion 5. At least one of the lower raised portion 41 and the upper raised portion 46 may be discontinuous in the circumferential direction Dc of the case 11. Similarly, at least one of the upper recessed portion 42 and the lower recessed portion 45 may be discontinuous in the circumferential direction Dc of the case 11.

The upper recessed portion 42 and the lower raised portion 41 are arranged lower than the upper wall 14. An upper end of the upper recessed portion 42 is arranged higher than the lower end 15L of the inner wall 15. A lower end of the upper recessed portion 42 is arranged lower than the lower end 15L of the inner wall 15. The lower raised portion 41 is arranged lower than the upper recessed portion 42. Therefore, the lower raised portion 41 is arranged lower than the lower end 15L of the inner wall 15.

A height of the lower raised portion 41 is a distance of the case 11 in the radial direction Dr from the bottom surface 42b of the upper recessed portion 42 to an inner end of the lower raised portion 41 which corresponds to a leading end of the lower raised portion 41. A depth of the upper recessed portion 42 is a distance of the case 11 in the radial direction Dr from the bottom surface 42b of the upper recessed portion 42 to the inner circumferential surface 13i of the outer wall 13. The depth of the upper recessed portion 42 may be equal to the height of the lower raised portion 41 or may be larger or smaller than the height of the lower raised portion 41. The depth of the upper recessed portion 42 may be equal to a distance of the case 11 in the radial direction Dr from the bottom surface 42b of the upper recessed portion 42 to the outer circumferential surface 13o of the outer wall 13 or may be larger or smaller than the distance.

When the upper raised portion 46 of the mouth portion 5 is fitted into the upper recessed portion 42 of the outer wall 13, an upper surface of the upper raised portion 46 faces up and down the side surface 42s (upper one) of the upper recessed portion 42. At this time, a distance from the upper surface of the upper raised portion 46 to the upper side surface 42s of the upper recessed portion 42 in an up/down direction may be shorter than the depth of the upper recessed portion 42. When the lower raised portion 41 of the outer wall 13 is fitted into the lower recessed portion 45 of the mouth portion 5, an upper surface of the lower raised portion 41 which corresponds to the lower side surface 42s of the upper recessed portion 42 faces up and down a lower surface of the lower recessed portion 45. At this time, a distance from the upper surface of the lower raised portion 41 to the lower surface of the lower recessed portion 45 in the up/down direction may be shorter than a depth of the lower recessed portion 45.

When the upper raised portion 46 of the mouth portion 5 is fitted into the upper recessed portion 42 of the outer wall 13 and the lower raised portion 41 of the outer wall 13 is fitted into the lower recessed portion 45 of the mouth portion 5, the lower surface 13L of the outer wall 13 faces up and down an upper surface of the neck flange 44. At this time, the lower surface 13L of the outer wall 13 may be in contact with the upper surface of the neck flange 44 or may be separated from the upper surface of the neck flange 44. FIG. 11 shows an example in which a clearance smaller than a thickness of the neck flange 44 in an up/down direction is formed between the lower surface 13L of the outer wall 13 and the upper surface of the neck flange 44.

As shown in FIG. 11, when the medical cap 2 is combined with the mouth portion 5, the lower raised portion 41 of the outer wall 13 is arranged between the upper raised portion 46 of the mouth portion 5 and the neck flange 44. In other words, the lower recessed portion 45 is constituted of the lower surface of the upper raised portion 46 and the upper surface of the neck flange 44. The lower recessed portion 45 is recessed internally from an outer end of the upper raised portion 46 which corresponds to a leading end of the upper raised portion 46. A distance of the case 11 in the radial direction Dr from a bottom of the lower recessed portion 45 to the outer end of the upper raised portion 46 is shorter than a distance of the case 11 in the radial direction Dr from the bottom of the lower recessed portion 45 to the outer end of the neck flange 44.

The neck flange 44 is in a circular annular shape which continues over an entire circumference of the mouth portion 5. An outer diameter of the mouth portion 5 is largest at the neck flange 44. An outer diameter of the outer wall 13 is largest at the upper flange 12 and smallest at a position other than the upper flange 12. An outer diameter of the upper flange 12 is larger than an outer diameter of the neck flange 44. An outer diameter of the lower end of the outer wall 13 is not more than the outer diameter of the neck flange 44. FIG. 11 shows an example in which the outer diameter of the lower end of the outer wall 13 is equal to or substantially equal to the outer diameter of the neck flange 44. The outer diameter of the lower end of the outer wall 13 may be larger than the outer diameter of the neck flange 44. When the medical cap 2 which is combined with the mouth portion 5 is viewed from below, the lower end of the outer wall 13 is hidden entirely or substantially entirely by the neck flange 44.

FIG. 11 shows the medical cap 2 and the mouth portion 5 after the sterilization process is performed. The inner circumferential surface 13i of the outer wall 13 includes the external contact portion 43 which is not in contact with the internal contact portion 48 before the sterilization process is performed and in contact with the internal contact portion 48 after the sterilization process is performed. The outer circumferential surface 35 of the mouth portion 5 includes the internal contact portion 48 which is not in contact with the inner circumferential surface 13i of the outer wall 13 before the sterilization process is performed and in contact with the inner circumferential surface 13i of the outer wall 13 after the sterilization process is performed. A process in which the internal contact portion 48 comes into contact with the external contact portion 43 will be described later.

The external contact portion 43 of the outer wall 13 is arranged higher than the lower end 15L of the inner wall 15. When the medical cap 2 is combined with the mouth portion 5, the internal contact portion 48 of the mouth portion 5 is arranged higher than the lower end 15L of the inner wall 15. The internal contact portion 48 and the external contact portion 43 are arranged higher than the lower end 15L of the inner wall 15 even after the sterilization process is performed. The external contact portion 43 is a portion with which the internal contact portion 48 has been in contact after the sterilization process is performed on the inner circumferential surface 13i of the outer wall 13 and does not include a portion with which the internal contact portion 48 is not in contact after the sterilization process is performed on the inner circumferential surface 13i of the outer wall 13.

FIG. 11 shows an example in which the internal contact portion 48 is in a cylindrical shape which continues over an entire circumference of the mouth portion 5 and the external contact portion 43 is in a cylindrical shape which continues over an entire circumference of the case 11. The internal contact portion 48 may continue over an entire circumference of the mouth portion 5 or may be discontinuous in the circumferential direction Dc of the case 11. In the latter case, the internal contact portion 48 may include a plurality of divided bodies which are arranged at an interval in the circumferential direction Dc of the case 11. Where the internal contact portion 48 continues over an entire circumference of the mouth portion 5, the external contact portion 43 continues over an entire circumference of the case 11, and where the internal contact portion 48 is discontinuous in the circumferential direction Dc of the case 11, the external contact portion 43 is discontinuous in the circumferential direction Dc of the case 11.

FIG. 11 shows an example in which an annular groove 47 which continues over an entire circumference of the mouth portion 5 is formed between the internal contact portion 48 of the mouth portion 5 and the upper raised portion 46 of the mouth portion 5. In this example, the internal contact portion 48 includes a cylindrical straight portion 48s which has a linear vertical cross section and a ring-like raised portion 48c which has a vertical cross section that protrudes outward. The straight portion 48s and the raised portion 48c are arranged higher than the annular groove 47.

The vertical cross section of the internal contact portion 48 may be constituted of one or more straight lines or one or more curved lines or may be constituted of one or more straight lines and one or more curved lines. The vertical cross section of the internal contact portion 48 may be partially or entirely a straight line extending up and down or may be inclined in relation to a vertical straight line. In the latter case, the vertical cross section of the internal contact portion 48 may entirely or partially protrude externally or may be recessed internally.

The straight portion 48s of the mouth portion 5 is arranged above the raised portion 48c of the mouth portion 5. The straight portion 48s and the raised portion 48c continue up and down. The straight portion 48s is longer than the raised portion 48c in an up/down direction. The straight portion 48s is longer than the annular groove 47 in the up/down direction. The annular groove 47 is longer than the raised portion 48c in the up/down direction. The straight portion 48s may be arranged below the raised portion 48c. A length of the straight portion 48s in the up/down direction may be not more than a length of the raised portion 48c in the up/down direction. The length of the straight portion 48s in the up/down direction may be not more than a length of the annular groove 47 in the up/down direction. The length of the annular groove 47 in the up/down direction may be not more than the length of the raised portion 48c in the up/down direction.

The raised portion 48c of the mouth portion 5 protrudes externally from the straight portion 48s of the mouth portion 5. The annular groove 47 is recessed internally from the raised portion 48c and the upper raised portion 46. A distance of the case 11 in the radial direction Dr from the center line Cm (refer to FIG. 3) of the mouth portion 5 to an outer end of the raised portion 48c may be equal to a distance of the case 11 in the radial direction Dr from the center line Cm of the mouth portion 5 to the outer end of the upper raised portion 46 or may be longer or shorter than the distance. FIG. 11 shows an example in which the outer end of the raised portion 48c is arranged more internally than the outer end of the upper raised portion 46.

In the case of the example shown in FIG. 11, the external contact portion 43 of the outer wall 13 includes a cylindrical straight portion 43s having a linear vertical cross section and a ring-like recessed portion 43c having a vertical cross section that is recessed externally. When the sterilization process is performed, the straight portion 48s of the outer wall 13 comes into contact with the straight portion 43s, and the raised portion 48c of the outer wall 13 comes into contact with the recessed portion 43c. The raised portion 48c is fitted into the recessed portion 43c, thereby regulating movements of the mouth portion 5 to the outer wall 13 in an up/down direction. The recessed portion 43c is a recess which is shallower than the upper recessed portion 42 of the outer wall 13. A depth of the recessed portion 43c may be not less than the depth of the upper recessed portion 42.

Next, a description will be given of the medical cap 2, the medical cap module, and the method for manufacturing the medical container 1.

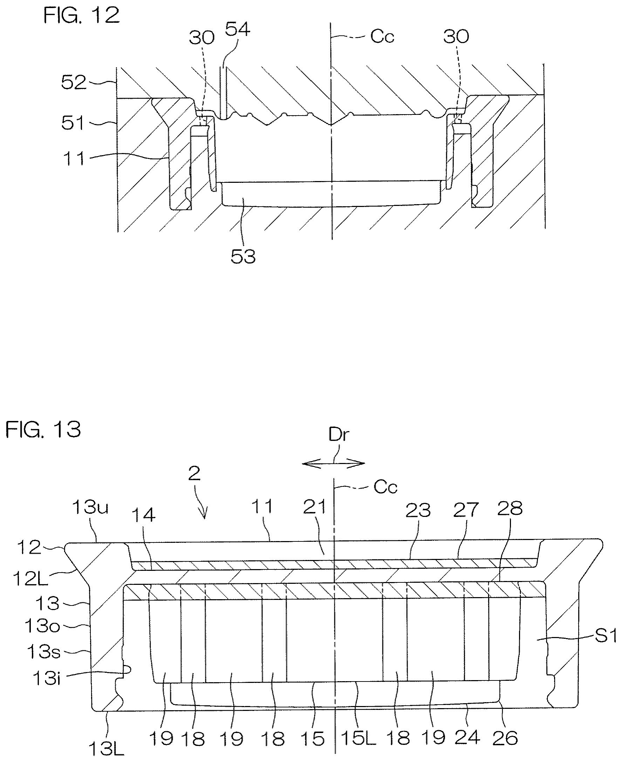

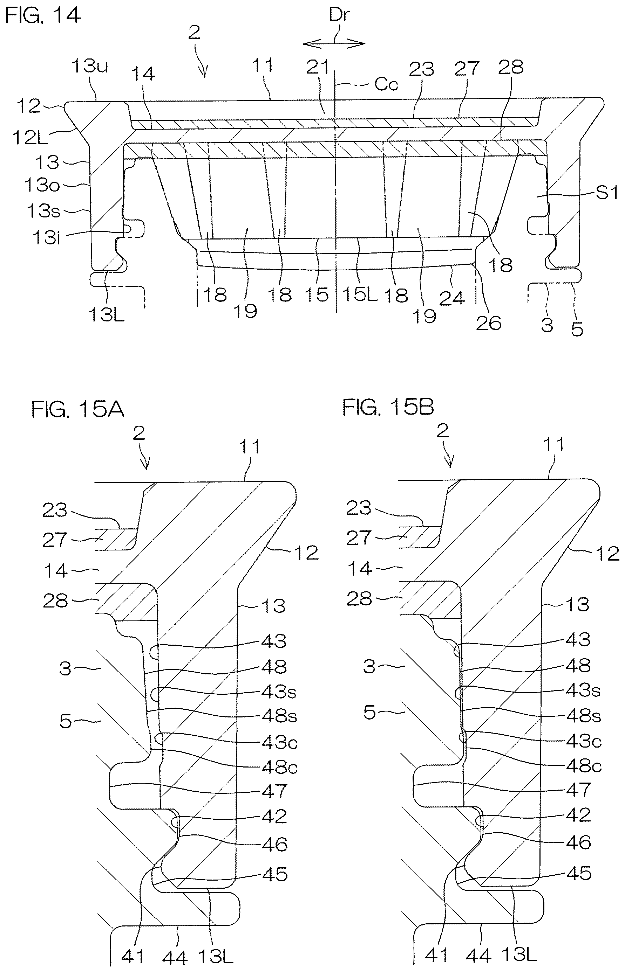

FIG. 12 is a brief cross-sectional view of a mold to manufacture the medical cap 2. FIG. 13 is a cross-sectional view which shows the inner wall 15 before deformation by being fastened by the mouth portion 5. FIG. 14 is a cross-sectional view which shows the inner wall 15 which has undergone deformation by being fastened by the mouth portion 5. FIG. 15A-B are each a cross-sectional view which shows a change before and after the internal contact portion 48 of the mouth portion 5 comes into contact with the external contact portion 43 of the outer wall 13. FIG. 15A shows the medical cap 2 and the mouth portion 5 after combining the medical cap 2 with the mouth portion 5 and before the sterilization process is performed. FIG. 15B shows the medical cap 2 and the mouth portion 5 after the sterilization process is performed. FIG. 13 and FIG. 14 show a cross section along line XIII-XIII shown in FIG. 5.

In manufacturing the medical cap 2, insert molding which is an injection molding process is used to mold the stopper 23 which is integral with the case 11. Specifically, as shown in FIG. 12, the case 11 is arranged at a predetermined position of a movable mold 51. Thereafter, the movable mold 51 is allowed to move to a fixed mold 52 together with the case 11, and the movable mold 51 is overlapped with the fixed mold 52. Thereby, a cavity 53 having an identical shape of the stopper 23 is formed by the case 11, the movable mold 51 and the fixed mold 52.

In FIG. 12, there is shown an example in which each of the movable mold 51 and the fixed mold 52 is one integral member and the movable mold 51 is arranged below the fixed mold 52. A posture of the movable mold 51 and that of the fixed mold 52 may be a posture that the movable mold 51 and the fixed mold 52 shown in FIG. 12 are turned at 90 degrees in a clockwise direction or in a counterclockwise direction. The movable mold 51 may be constituted of a plurality of members which are coupled to each other. This applies also to the fixed mold 52.

After formation of the cavity 53, a melted material such as thermoplastic elastomer is injected into the cavity 53 via a passage 54 which is formed in the fixed mold 52. The liquid material which has been injected into the cavity 53 fills a space at which the internal portion 24 and the upper portion 27 of the stopper 23 are to be formed. The liquid material which has been supplied to a space at which the upper portion 27 is to be formed enters from the space into the plurality of through holes 30 (refer to FIG. 9) of the upper wall 14 and flows into a space at which the lower portion 28 of the stopper 23 is to be formed. As described above, the cavity 53 is entirely or substantially entirely filled with the melted material.

After the cavity 53 has been filled with the liquid material, the liquid material inside the cavity 53 is cooled while the state in which the cavity 53 has been filled with the liquid material is kept. Thereby, the liquid material inside the cavity 53 is solidified and changed into the stopper 23. The stopper 23 is such that the liquid material inside the cavity 53 is solidified. The liquid material in contact with the case 11 is changed into a solid, while being connected to the case 11. The stopper 23 which is integral with the case 11 is, thereby, manufactured.

After the liquid material inside the cavity 53 has been changed into the stopper 23, the movable mold 51 is detached from the fixed mold 52. Thereafter, the stopper 23 and the case 11 are removed from the movable mold 51. Before or after the stopper 23 and the case 11 are removed, at least one of the stopper 23 and the case 11 may be processed, whenever necessary. For example, a burr and a material which is solidified inside the passage 54 of the fixed mold 52 may be removed from the stopper 23. Thus, the medical cap 2 including the stopper 23 and the case 11 is manufactured.

After manufacturing the medical cap 2, the medical cap 2 is combined with the mouth portion 5, and a position of the medical cap 2 in relation to the mouth portion 5 is aligned with a designated position. FIG. 14 shows a state in which the position of the medical cap 2 in relation to the mouth portion 5 is aligned with the designated position. The designated position is a position at which the opening 4 of the mouth portion 5 is closed by the medical cap 2. The designated position is a position at which the mouth portion 5 is arranged at the tubular space S1 between the inner wall 15 and the outer wall 13 and also the lower raised portion 41 of the outer wall 13 is fitted into the lower recessed portion 45 of the mouth portion 5 and the upper raised portion 46 of the mouth portion 5 is fitted into the upper recessed portion 42 of the outer wall 13.

Where the mouth portion 5 and the housing portion 6 of the container main body 3 are a different component, before the mouth portion 5 is connected to the housing portion 6, the medical cap 2 may be combined with the mouth portion 5, or after the mouth portion 5 has been connected to the housing portion 6, the medical cap 2 may be combined with the mouth portion 5. In the latter case, before the medical cap 2 is combined with the mouth portion 5, a liquid, a solid or a semi-solid state substance (medicine, etc.) may be placed into the container main body 3, whenever necessary.

When the medical cap 2 is combined with the mouth portion 5, one of the medical cap 2 and the mouth portion 5 may be pressed to the other of the medical cap 2 and the mouth portion 5, or the medical cap 2 and the mouth portion 5 may be pressed to each other. The medical cap 2 may be pressed from the upper side of the mouth portion 5 to the mouth portion 5, or in a state that the medical cap 2 is inverted upside down, the mouth portion 5 may be pressed from the upper side of the medical cap 2 to the medical cap 2. Hereinafter, a description will be given of an example in which the medical cap 2 is pressed from the upper side of the mouth portion 5 to the mouth portion 5, thereby moving the medical cap 2 to the designated position.

When the medical cap 2 is combined with the mouth portion 5, the medical cap 2 is placed over the mouth portion 5 so that the mouth portion 5 will be inserted into the tubular space S1 between the inner wall 15 and the outer wall 13. In this state, the medical cap 2 is pressed to the mouth portion 5. As described above, the inner diameter of the mouth portion 5 is larger than the outer diameter of the lower end 15L of the inner wall 15 at the upper end of the mouth portion 5 and is continuously decreased to a value smaller than the outer diameter as it moves away downward from the upper end of the mouth portion 5. Therefore, when the mouth portion 5 is inserted between the inner wall 15 and the outer wall 13, the inner wall 15 advances into the mouth portion 5 and is pushed internally by the inner circumferential surface 32 of the mouth portion 5.

Specifically, when the mouth portion 5 is inserted into the tubular space S1, the inner wall 15 is pushed internally by the inner circumferential surface 32 of the mouth portion 5 and undergoes elastic deformation internally. At this time, a portion of the inner wall 15 may undergo plastic deformation. The inner wall 15 moves downward in relation to the mouth portion 5 along the inner circumferential surface 32 of the mouth portion 5, while undergoing elastic deformation. Thereby, the inner wall 15 is fastened by the mouth portion 5, and the inner wall 15 is decreased in inner diameter and outer diameter. The stopper 23 is fastened by the inner wall 15 and undergoes elastic deformation.

In the medical cap 2, the inner wall 15 moves to the designated position, while being fastened by the mouth portion 5. An area at which the inner circumferential surface 32 of the mouth portion 5 is in contact with the outer circumferential surface 15o of the inner wall 15 is increased as the inner wall 15 moves downward in relation to the mouth portion 5. The inner wall 15 is continuously increased in deformation amount as it moves away downward from the upper end of the mouth portion 5. Therefore, as shown in FIG. 13 and FIG. 14, the outer circumferential surface 15o of the inner wall 15 is changed from a cylindrical shape, the diameter of which is fixed or substantially fixed, to an inverted truncated cone shape following the inner circumferential surface 32 of the mouth portion 5 (specifically, upper tapered portion 33u).

When the medical cap 2 reaches the designated position, the lower raised portion 41 of the outer wall 13 is fitted into the lower recessed portion 45 of the mouth portion 5, and the upper raised portion 46 of the mouth portion 5 is fitted into the upper recessed portion 42 of the outer wall 13. Further, the internal portion 24 of the stopper 23 is pressed to the inner circumferential surface 32 of the mouth portion 5, and the lower portion 28 of the stopper 23 is pressed to the leading end surface 31 of the mouth portion 5. The internal portion 24 and the lower portion 28 are firmly attached to the inner circumferential surface 32 and the leading end surface 31 of the mouth portion 5 over an entire circumference of the mouth portion 5. Thereby, a clearance between the medical cap 2 and the mouth portion 5 is sealed.

As shown in FIG. 13 and FIG. 14, the inner wall 15 includes the thin portions 18 and the thick portions 19 which are arranged in the circumferential direction Dc of the case 11. A thickness of the inner wall 15 of the case 11 in the radial direction Dr before the medical cap 2 is combined with the mouth portion 5 is increased and decreased alternately and repeatedly according to a position of the case 11 in the circumferential direction Dc. When the inner wall 15 is fastened by the mouth portion 5, the inner wall 15 undergoes deformation, resulting in a decrease in inner diameter and outer diameter of the inner wall 15. At this time, the thin portion 18 undergoes deformation in the circumferential direction Dc of the case 11 at a deformation amount larger than that of the thick portion 19.

FIG. 13 shows an example in which the width of the thin portion 18 in the circumferential direction Dc of the case 11 before the medical cap 2 is combined with the mouth portion 5 is fixed or substantially fixed. FIG. 14 shows an example in which, when the medical cap 2 is combined with the mouth portion 5, the thin portion 18 is deformed so that the thin portion 18 is continuously decreased in width, as it approaches the lower end 15L of the inner wall 15. The width of the thin portion 18 at the lower end 15L of the inner wall 15 may be zero or substantially zero or may be a value exceeding zero. In other words, the two thick portions 19 closest in the circumferential direction Dc of the case 11 may be in contact with each other at the lower end 15L of the inner wall 15 or may be separated in the circumferential direction Dc of the case 11 at the lower end 15L of the inner wall 15.

After the medical cap 2 has been combined with the mouth portion 5 and a position of the medical cap 2 in relation to the mouth portion 5 has been aligned with the designated position, the sterilization process to heat the medical cap 2 and the mouth portion 5 is performed. FIG. 15A shows the medical cap 2 and the mouth portion 5 which are after combining the medical cap 2 with the mouth portion 5 and before the sterilization process is performed. As shown in FIG. 15A, before the sterilization process is performed, the internal contact portion 48 disposed on the outer circumferential surface 35 of the mouth portion 5 is not in contact with the external contact portion 43 disposed on the inner circumferential surface 13i of the outer wall 13 and faces the external contact portion 43, with an interval kept.

Since the medical cap 2 and the mouth portion 5 are heated during the sterilization process, the medical cap 2 and the mouth portion 5 rise in temperature, resulting in a decrease in rigidity of the medical cap 2 and the mouth portion 5. The inner wall 15 and the stopper 23 are fastened by the mouth portion 5, and the mouth portion 5 is pushed externally so as to widen the mouth portion 5. The lower portion 28 of the stopper 23 is in contact with the mouth portion 5 before the start of sterilization, thereby regulating external deformation of the mouth portion 5. When a force by which the inner wall 15 and the stopper 23 push the mouth portion 5 externally exceeds a force to regulate the deformation of the mouth portion 5 (force applied from the lower portion 28 to the mouth portion 5 and resistance force of the mouth portion 5 itself) at the time of a decrease in rigidity of the mouth portion 5, the mouth portion 5 undergoes deformation, resulting in an increase in inner diameter and outer diameter of the mouth portion 5.

FIG. 15B shows the medical cap 2 and the mouth portion 5 after the sterilization process is performed. When the sterilization process is performed, the mouth portion 5 undergoes deformation so that, for example, the mouth portion 5 is continuously increased in inner diameter and outer diameter, as it approaches the upper end of the mouth portion 5. In this case, the mouth portion 5 undergoes deformation so that a vertical cross section of the mouth portion 5 collapses outside obliquely at any position in the circumferential direction Dc of the case 11. Even after sterilization has been completed and the medical cap 2 and the mouth portion 5 are lowered in temperature, the mouth portion 5 will not assume its original shape or will not substantially assume its original shape.

As shown in FIG. 15B, after the sterilization process is performed, the internal contact portion 48 of the mouth portion 5 is in contact with the external contact portion 43 of the outer wall 13. FIG. 15B shows a state that the straight portion 48s of the mouth portion 5 is received by the straight portion 43s of the outer wall 13 and the raised portion 48c of the mouth portion 5 is housed at the recessed portion 43c of the outer wall 13. The internal contact portion 48 of the mouth portion 5 is brought into contact with the external contact portion 43 of the outer wall 13, thus making it possible to lower a decrease in force by which the mouth portion 5 fastens the inner wall 15 and the stopper 23 and also to keep a state that the stopper 23 has undergone elastic deformation. Further, the raised portion 48c of the mouth portion 5 is housed at the recessed portion 43c of the outer wall 13, thus making it possible to prevent or minimize such deformation of the mouth portion 5 that the internal contact portion 48 of the mouth portion 5 moves downward in relation to the outer wall 13.

As described so far, the medical cap module which includes the medical cap 2 and the mouth portion 5 is manufactured. Where the medical cap module is used to manufacture the medical container 1, the mouth portion 5 is connected to the housing portion 6. Where the medical cap 2 is combined with the mouth portion 5 after connection of the mouth portion 5 to the housing portion 6, the medical cap 2 is combined with the mouth portion 5 according to the same procedures as described above. Thereby, the medical container 1 is manufactured without a state of the medical cap module.

Next, a description will be given of effects on the present preferred embodiment.

In the present preferred embodiment, the tubular mouth portion 5 having the opening 4 through which a liquid, etc., passes is arranged at the tubular space S1 between the inner wall 15 and the outer wall 13 of the case 11. The stopper 23 is arranged inside the inner wall 15. The inner wall 15 is arranged between the stopper 23 and the mouth portion 5 in a state of being in contact with the stopper 23 and the mouth portion 5. The inner wall 15 includes the thin portion 18 and the thick portion 19 which are different from each other in thickness in the radial direction Dr of the case 11. The thin portion 18 and the thick portion 19 are arranged in the circumferential direction Dc of the case 11.

When the mouth portion 5 is arranged at the tubular space S1 between the inner wall 15 and the outer wall 13, the inner wall 15 is fastened by the mouth portion 5, resulting in deformation of the thin portion 18 which is thinner than the thick portion 19. Thereby, the inner wall 15 is decreased in inner diameter and outer diameter and the stopper 23 is fastened by the inner wall 15. Further, since the thick portion 19 is disposed instead of making the entire circumference of the inner wall portion 19 thin, the rigidity of the inner wall 15 can be secured. In addition, since no notch is provided but the thin portion 18 is disposed, as compared with a case where the notch is disposed, it is possible to reduce a clearance between a front surface of the stopper 23 and the inner circumferential surface 32 of the mouth portion 5 or to prevent occurrence of the clearance. Thereby, as compared with a case where the notch is disposed, it is possible to prevent a decrease in airtightness of the medical cap 2.

In the present preferred embodiment, the thick portion 19 forms the external raised portion 17 which protrudes in the radial direction Dr of the case 11 on the outer circumferential surface 15o of the inner wall 15, and the thin portion 18 forms the external recessed portion 16 which is recessed in the radial direction Dr of the case 11 on the outer circumferential surface 15o of the inner wall 15. When the mouth portion 5 is arranged at the tubular space S1 between the inner wall 15 and the outer wall 13, the inner circumferential surface 32 of the mouth portion 5 and the outer circumferential surface 15o of the inner wall 15 rub against each other. When the external recessed portion 16 is disposed on the outer circumferential surface 15o of the inner wall 15, as compared with a case where no external recessed portion 16 is provided, a range in which the inner circumferential surface 32 of the mouth portion 5 and the outer circumferential surface 15o of the inner wall 15 rub against each other is narrowed. Thereby, it is possible to reduce a friction resistance applied to the mouth portion 5 and the inner wall 15 when the medical cap 2 is combined with the mouth portion 5.

In the present preferred embodiment, instead of making both the inner circumferential surface 15i and the outer circumferential surface 15o of the inner wall 15 a tubular uneven surface, only the outer circumferential surface 15o of the inner wall 15 is made into a tubular uneven surface having undulations in the radial direction Dr of the case 11. Before the medical cap 2 is combined with the mouth portion 5, the inner circumference surface 15i of the inner wall 15 is cylindrical. When the medical cap 2 is combined with the mouth portion 5, the stopper 23 is fastened by the inner circumferential surface 15i of the inner wall 15. Therefore, as compared with a case where the inner circumferential surface 15i of the inner wall 15 is the tubular uneven surface, the stopper 23 can be fastened by a constant force. In other words, it is possible to reduce a difference in force by which the stopper 23 is pushed internally at each position in the circumferential direction Dc of the case 11.

In the present preferred embodiment, when the medical cap 2 is combined with the mouth portion 5, not only the outer circumferential surface 15o of the inner wall 15 but also the lower end portion of the stopper 23 comes into contact with the inner circumferential surface 32 of the mouth portion 5. That is, the outer circumferential surface 15o of the inner wall 15 comes into contact with the inner circumferential surface 32 of the mouth portion 5, by which the clearance between the medical cap 2 and the mouth portion 5 is closed, and the lower end portion of the stopper 23 comes into contact with the inner circumferential surface 32 of the mouth portion 5, by which the clearance between the medical cap 2 and the mouth portion 5 is closed. Thereby, it is possible to further increase airtightness of the medical cap 2.

In the present preferred embodiment, the inner circumferential surface 32 of the mouth portion 5 comes into contact with the outer circumferential surface 15o of the inner wall 15, and the outer circumferential surface 35 of the mouth portion 5 also comes into contact with the inner circumferential surface of the outer wall 13. More specifically, the internal contact portion 48 disposed on the outer circumferential surface 35 of the mouth portion 5 comes into contact with the external contact portion 43 disposed on the inner circumferential surface of the outer wall 13. The internal contact portion 48 and the external contact portion 43 are arranged higher than the lower end 15L of the inner wall 15. Even if the inner wall 15 and the stopper 23 push the mouth portion 5 externally so as to widen the mouth portion 5, contact of the internal contact portion 48 with the external contact portion 43 is able to prevent the mouth portion 5 from widening externally. When the mouth portion 5 widens externally, the inner wall 15 also widens externally, thus resulting in a decrease in force by which the inner wall 15 fastens the stopper 23. Therefore, it is possible to prevent a decrease in force by which the inner wall 15 fastens the stopper 23.

In the present preferred embodiment, the raised portion 48c disposed at the internal contact portion 48 of the mouth portion 5 is housed at the recessed portion 43c disposed at the external contact portion 43 of the outer wall 13. A relative movement of the internal contact portion 48 and the external contact portion 43 in an up/down direction is regulated by contact of the raised portion 48c with the recessed portion 43c. When the internal contact portion 48 of the mouth portion 5 moves in the up/down direction in relation to the external contact portion 43 of the outer wall 13, a force by which the mouth portion 5 fastens the inner wall 15 can be decreased. In addition, since the recessed portion 43c is not disposed but the raised portion 48c is disposed at the mouth portion 5, a decrease in rigidity of the mouth portion 5 can be prevented and the mouth portion 5 is made less likely to widen externally.

In the present preferred embodiment, when the medical cap 2 is combined with the mouth portion 5, the upper raised portion 46 of the mouth portion 5 is housed at the upper recessed portion 42 of the outer wall 13 and the lower raised portion 41 of the outer wall 13 is housed at the lower recessed portion 45 of the mouth portion 5. A relative movement of the mouth portion 5 and the outer wall 13 in an up/down direction is regulated by contact of the upper raised portion 46 with the upper recessed portion 42 and contact of the lower raised portion 41 with the lower recessed portion 45. In addition, when the upper raised portion 46 and the lower raised portion 41 are fitted into the upper recessed portion 42 and the lower recessed portion 45, a sensation is transmitted to the finger of a person who touches the medical cap 2 or the mouth portion 5. Thereby, the fact that the medical cap 2 or the mouth portion 5 has reached a proper position can be transmitted to the finger of a person.

In the present preferred embodiment, the annular neck flange 44 disposed on the outer circumferential surface 35 of the mouth portion 5 is arranged below the outer wall 13. The outer diameter of the lower end of the outer wall 13 is equal to the outer diameter of the neck flange 44 or smaller than the outer diameter of the neck flange 44. Even if the finger of a person moves to the outer wall 13 from the opposite side of the outer wall 13 in relation to the neck flange 44 or the neck flange 44 and the outer wall 13 move to the finger of a person, the finger is less likely to touch the lower end of the outer wall 13 or the vicinity thereof. Therefore, it is possible to reduce a frequency at which the finger of a person touches the outer wall 13 unintentionally.

In the present preferred embodiment, as described above, as compared with a case where a notch is disposed, with the rigidity of the inner wall 15 of the case 11 being secured, it is possible to reduce a clearance between the front surface of the stopper 23 and the inner circumferential surface 32 of the mouth portion 5 or prevent occurrence of the clearance. Use of the medical cap 2 and the mouth portion 5 makes it possible to prevent leakage of a liquid inside the container main body 3 through the mouth portion 5 or intrusion of foreign matter in the container main body 3 through the mouth portion 5.

In the present preferred embodiment, the medical cap 2 is combined with the mouth portion 5. Thereafter, the medical cap 2 and the mouth portion 5 are heated. The mouth portion 5 is made of a thermoplastic resin. When the mouth portion 5 rises in temperature, the mouth portion 5 is decreased in rigidity. The internal contact portion 48 which is disposed on the outer circumferential surface 35 of the mouth portion 5 is separated from the external contact portion 43 which is disposed on the inner circumferential surface of the outer wall 13. Further, the mouth portion 5 is pushed externally by the inner wall 15 and the stopper 23. Therefore, when the mouth portion 5 rises in temperature, the mouth portion 5 is widened externally by deformation of the mouth portion 5.

When the mouth portion 5 is widened, the internal contact portion 48 of the mouth portion 5 comes close to and comes into contact with the external contact portion 43 of the outer wall 13. Thereby, it is possible to prevent a further deformation of the mouth portion 5 and lower a decrease in force by which the mouth portion 5 fastens the inner wall 15 and the stopper 23. Further, even if the medical cap 2 and the mouth portion 5 are lowered in temperature, the mouth portion 5 will not assume or will not substantially assume its original shape. It is, thereby, possible to retain a force by the mouth portion 5 fastens the inner wall 15 and the stopper 23.

In the present preferred embodiment, the tubular mouth portion 5 having the opening 4 through which a liquid, etc., passes is arranged at the tubular space S1 between the inner wall 15 and the outer wall 13 of the case 11. The stopper 23 is arranged inside the inner wall 15. The inner wall 15 is arranged between the stopper 23 and the mouth portion 5. The upper wall 14 of the case 11 is arranged above the mouth portion 5 which is arranged between the inner wall 15 and the outer wall 13. The tubular space S1 which houses the mouth portion 5 is formed of the inner wall 15, the outer wall 13 and the upper wall 14.

The stopper 23 includes not only the internal portion 24 which is arranged inside the inner wall 15 but also the lower portion 28 which is arranged below the upper wall 14. When the mouth portion 5 is arranged at the tubular space S1 between the inner wall 15 and the outer wall 13, the lower portion 28 is arranged between the mouth portion 5 and the upper wall 14. Thus, it is possible to reduce a clearance between the leading end surface 31 of the mouth portion 5 and the lower surface of the upper wall 14 or to fill up the clearance by the lower portion 28, thereby increasing airtightness of the medical cap 2.

Further, the lower portion 28 is not a member independent of the internal portion 24 but is connected by the connection portion 29 of the stopper 23 to the internal portion 24. Therefore, it is possible to reduce a relative movement of the internal portion 24 and the lower portion 28. In addition, since the connection portion 29 of the stopper 23 passes through the through hole 30 which penetrates through the case 11, a movement in relation to the case 11 is regulated by the inner circumferential surface of the through hole 30. It is, thereby, possible to reduce a relative movement of the stopper 23 and the case 11.

Where the stopper 23 is subjected to injection molding, a melted material of the stopper 23 is allowed to flow into the through hole 30 of the case 11, thus making it possible to mold the lower portion 28 and the connection portion 29 which are integral with the internal portion 24. Further, the melted material of the stopper 23 is changed into a solid, with being connected to the case 11, when being cooled. It is, thereby, possible to increase a force by which the stopper 23 is connected to the case 11 and to prevent or minimize a relative movement of the stopper 23 and the case 11.

In the present preferred embodiment, when the mouth portion 5 is arranged at the tubular space S1 between the inner wall 15 and the outer wall 13, the lower portion 28 is arranged between the mouth portion 5 and the upper wall 14 in a state of being in contact with both of the leading end surface 31 of the mouth portion 5 and the lower surface of the upper wall 14. Thereby, it is possible to fill up a clearance between the leading end surface 31 of the mouth portion 5 and the lower surface of the upper wall 14 by the lower portion 28 and to increase airtightness of the medical cap 2.

In the present preferred embodiment, when the mouth portion 5 is arranged at the tubular space S1 between the inner wall 15 and the outer wall 13, the lower portion 28 of the stopper 23 comes into contact with the leading end surface 31 of the mouth portion 5 and the lower end portion of the stopper 23 also comes into contact with the inner circumferential surface 32 of the mouth portion 5. That is, the clearance between the medical cap 2 and the mouth portion 5 is closed at a plurality of positions. Thereby, it is possible to further increase airtightness of the medical cap 2.

In the present preferred embodiment, in addition to the internal portion 24, the lower portion 28 and the connection portion 29, the upper portion 27 is disposed at the stopper 23. The upper portion 27 extends from the internal portion 24 to a position above the upper wall 14. The connection portion 29 extends from the upper portion 27 to the lower portion 28 through the through hole 30 which penetrates up and down through the upper wall 14. Therefore, the upper wall 14 is arranged between the upper portion 27 and the lower portion 28. A movement of the stopper 23 in relation to the case 11 in an up/down direction is regulated by contact of the upper portion 27 with the upper wall 14 or contact of the lower portion 28 with the upper wall 14. Thereby, it is possible to prevent or minimize a relative movement of the stopper 23 and the case 11 in the up/down direction. Further, a movement of the stopper 23 in relation to the case 11 in a radial direction is regulated by contact of the connection portion 29 with the through hole 30. Therefore, in the present preferred embodiment, the stopper 23 is less likely to peel off from the case 11 and the medical cap 2 can be increased in airtightness.

In the present preferred embodiment, the outer circumferential surface 15o of the inner wall 15 forms the external recessed portion 16 which is recessed in the radial direction Dr of the case 11. A width of the upper wall 14 which corresponds to a length of the upper wall 14 in the radial direction Dr of the case 11 is increased at the external recessed portion 16. The through hole 30 which penetrates up and down through the upper wall 14 is disposed at a portion of the upper wall 14 which is wide in width. Further, when the medical cap 2 is viewed from below, at least a portion of the through hole 30 is arranged inside the external recessed portion 16. Therefore, as compared with a case where the through hole 30 is arranged at a position away from the external recessed portion 16 in the circumferential direction Dc of the case 11, it is possible to easily increase an area of the through hole 30 and that of the connection portion 29.

In the present preferred embodiment, the inner wall 15 and the upper wall 14 form the root-side recessed portion 20 which is recessed from the outer circumferential surface 15o of the inner wall 15. A portion of the lower portion 28 is housed at the root-side recessed portion 20. A movement of the stopper 23 in relation to the case 11 in an up/down direction is regulated by contact of a front surface of the lower portion 28 with an inner surface of the root-side recessed portion 20. In addition, since the thickness of the inner wall 15 in the radial direction Dr of the case 11 is decreased at the root-side recessed portion 20, as compared with a case where no root-side recessed portion 20 is provided, it is possible to easily deform the inner wall 15 internally and to fasten the stopper 23 by the inner wall 15.

In the present preferred embodiment, the large diameter portion 25 and the small diameter portion 26 different from each other in outer diameter are disposed at the internal portion 24 of the stopper 23. The small diameter portion 26 smaller in outer diameter than the large diameter portion 25 extends downward from the lower end of the large diameter portion 25 which is surrounded by the inner wall 15. The lower end 15L of the inner wall 15 is arranged at a position which is lower than the lower end of the large diameter portion 25 and also higher than a lower end of the small diameter portion 26. Therefore, the inner circumferential surface 15i of the inner wall 15 and the outer circumferential surface of the small diameter portion 26 form the annular groove 26g which is recessed upward toward the lower surface of the large diameter portion 25.

It is conceivable that a material of the stopper 23 which has melted inside the cavity 53 which is formed by the case 11, the movable mold 51 and the fixed mold 52 is injected, thereby molding the stopper 23 (insert molding which is an injection molding process). In this case, it is necessary to support the case 11 by at least one of the movable mold 51 and the fixed mold 52. That is, an example of the manufacturing method according to the present invention includes a step of arranging the case 11 inside a mold and a step of forming the stopper 23 by injecting a melted material of the stopper 23 into a cavity 53 that is formed by the case 11 and the mold and cooling the material inside the cavity 53. As described above, the inner circumferential surface 15i of the inner wall 15 and the outer circumferential surface of the small diameter portion 26 form the annular groove 26g which is recessed upward to the lower surface of the large diameter portion 25. A portion of the movable mold 51 or a portion of the fixed mold 52 supports an internal portion and an external portion of the inner wall 15, thereby forming the groove 26g. That is, in the step of arranging the case 11 inside the mold, the mold includes the movable mold 51 and the fixed mold 52 and the movable mold 51 or the fixed mold 52 supports an internal portion and an external portion of the inner wall 15. Thus, it is possible to increase the stability of the case 11 with regard to the movable mold 51 and the fixed mold 52 and also to increase a dimensional accuracy of the stopper 23 and the case 11. In the step of arranging the case 11 inside the mold, the movable mold 51 or the fixed mold 52 supports an inner circumferential surface of the disk-shaped recessed portion 21. Thus, it is possible to increase the stability of the case 11 with regard to the movable mold 51 and the fixed mold 52.

Next, a description will be given of other preferred embodiments.

Instead of molding the stopper 23 integral with the case 11 by insert molding after the case 11 has been molded, after the stopper 23 has been molded, the case 11 integral with the stopper 23 may be molded by insert molding. Alternatively, after the case 11 and the stopper 23 have been separately molded, both of them may be combined. Instead of the above, the case 11 and the stopper 23 may be molded by two-color molding in which resin materials different from each other are molded alternately in one molding cycle.

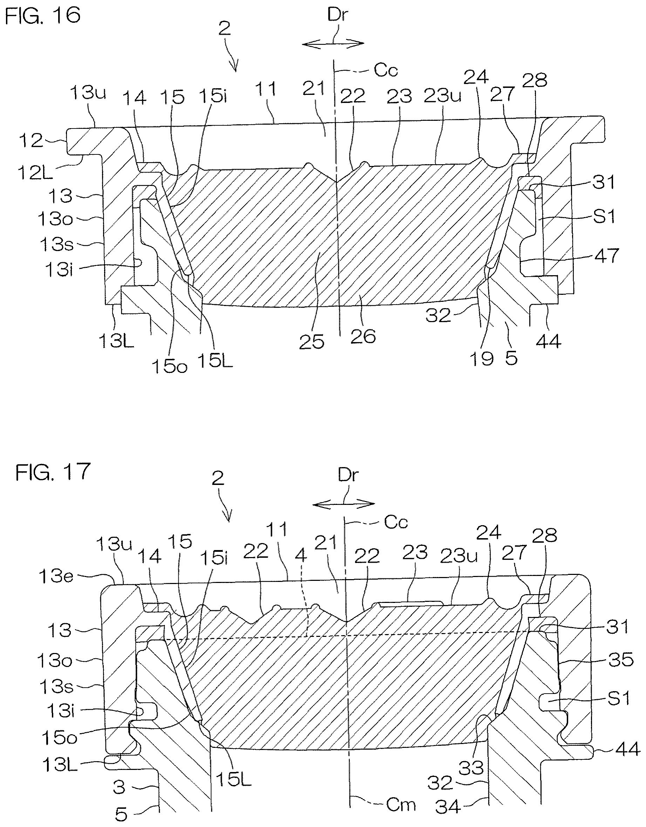

In addition to simply combining the medical cap 2 and the mouth portion 5, the medical cap 2 and the mouth portion 5 may be connected by ultrasonic welding. FIG. 16 shows an example in which, in a state that the outer wall 13 and the neck flange 44 are pressed to each other, ultrasonic vibration is applied to the outer wall 13 and the neck flange 44, by which the outer wall 13 and the neck flange 44 are melted and connected at a contact position of them.

The vertical cross section of the upper flange 12 of the medical cap 2 may be in a rectangular shape or a square shape in which two sides are horizontal to each other. FIG. 16 shows an example in which the lower surface 12L of the upper flange 12 is a horizontal surface from the straight portion 13s of the outer wall 13 to the outer end of the upper flange 12. The outer end of the upper flange 12 is a cylindrical surface extending up and down. An upper surface of the upper flange 12 is an annular horizontal surface as a portion of the upper surface 13u of the outer wall 13.

Instead of making the inner circumferential surface 15i of the inner wall 15 cylindrical and the outer circumferential surface 15o of the inner wall 15 an uneven surface, the inner circumferential surface 15i of the inner wall 15 may be made into an uneven surface and the outer circumferential surface 15o of the inner wall 15 may be made cylindrical. Alternatively, the inner circumferential surface 15i and the outer circumferential surface 15o of the inner wall 15 may be both made into an uneven surface.

Further, as shown in FIG. 17, the medical cap 2 may be in a shape that no upper flange 12 is provided. In this case, an outer edge 13e of the upper surface 13u of the outer wall 13 corresponds to a portion of the outer circumferential surface 13o of the outer wall 13. The outer circumferential surface 13o extends downward from the outer edge 13e of the upper surface 13u. According to a modified example shown in FIG. 17, as compared with a case where the upper flange 12 is provided, there is no portion by which the finger is caught and, therefore, the medical cap 2 is less likely to be removed from the mouth portion 5, and improper opening for the purpose of contamination by foreign matter, etc., is less likely to be attempted. Further, since the medical cap 2 is decreased in outer diameter, such advantage is provided that the number of cavities in a mold, that is, the number of the medical caps 2 which can be manufactured at the same time by the mold is increased and a resin is used in a reduced quantity.

The small diameter portion 26 which corresponds to the lower end portion of the stopper 23 may not be in contact with the inner circumferential surface 32 of the mouth portion 5. In this case, the lower end of the stopper 23 may be arranged higher than the lower end 15L of the inner wall 15.

The internal contact portion 48 of the mouth portion 5 may be made short up and down. For example, the internal contact portion 48 is not in a cylindrical shape longer up and down than the annular groove 47 which is formed on the outer circumferential surface 35 of the mouth portion 5 but may be in a ring shape shorter up and down than the annular groove 47.

The raised portion 48c of the mouth portion 5 and the recessed portion 43c of the outer wall 13 may be omitted. That is, only the straight portion 48s may be disposed at the internal contact portion 48 of the mouth portion 5, and only the straight portion 43s may be disposed at the external contact portion 43 of the outer wall 13. Alternatively, only the raised portion 48c may be disposed at the internal contact portion 48 of the mouth portion 5, and only the recessed portion 43c may be disposed at the external contact portion 43 of the outer wall 13.

As shown in FIG. 16, a portion which is positioned higher than the lower end 15L of the inner wall 15 on the inner circumferential surface 13i of the outer wall 13 may be separated from the outer circumferential surface 35 of the mouth portion 5 even after the sterilization process is performed. That is, the internal contact portion 48 of the mouth portion 5 and the external contact portion 43 of the outer wall 13 may be omitted. Alternatively, the portion which is positioned higher than the lower end 15L of the inner wall 15 on the inner circumferential surface 13i of the outer wall 13 may be in contact with the outer circumferential surface 35 of the mouth portion 5 before the sterilization process is performed.

The annular groove 47 which is formed between the internal contact portion 48 of the mouth portion 5 and the upper raised portion 46 of the mouth portion 5 may be omitted.

Of two pairs of raised portions and recessed portions (a pair of the upper raised portion 46 of the mouth portion 5 and the upper recessed portion 42 of the outer wall 13 and a pair of the lower raised portion 41 of the outer wall 13 and the lower recessed portion 45 of the mouth portion 5), at least one pair of them may be omitted.

The neck flange 44 may be omitted.

When the medical cap 2 is combined with the mouth portion 5, the lower portion 28 of the stopper 23 may be separated from at least one of the mouth portion 5 and the upper wall 14.

The upper portion 27 of the stopper 23 may be omitted. In this case, the through hole 30 of the case 11 may be formed in the inner wall 15 or may be formed at a corner portion which is formed by the upper wall 14 and the inner wall 15. The connection portion 29 of the stopper 23 may be omitted. In this case, the thin portion 18 may be omitted and a gap may be arranged between the two thick portions 19 closest to each other in the circumferential direction instead of the thin portion 18. In this case, a plurality of thick portions 19 may be arranged in the circumferential direction across the equal intervals. The lower portion 28 may be connected to the internal portion 24 through a gap between the two thick portions 19 closest to each other.

In a case where the through holes 30 of the case 11 are disposed in the upper wall 14, when the medical cap 2 is viewed from below, the entirety of the through hole 30 may be arranged outside the external recessed portion 16. In this case, the entirety of the through hole 30 may be arranged outside the thin portion 18 or the thick portion 19 or may be arranged outside both of the thin portion 18 and the thick portion 19. That is, a portion of the through hole 30 may be arranged outside the thin portion 18 and the remaining portion of through hole 30 may be arranged outside the thick portion 19.

The lower portion 28 of the stopper 23 does not need to be housed at the root-side recessed portion 20 which is formed by the inner wall 15 and the upper wall 14. In this case, the root-side recessed portion 20 may be omitted.

The lower end 15L of the inner wall 15 may be arranged higher than the lower end 25L of the large diameter portion 25. Alternatively, the lower end 15L of the inner wall 15 may be arranged lower than the lower end 26L of the small diameter portion 26 which corresponds to the lower end of the stopper 23.

Instead of bringing the lower portion 28 and the mouth portion 5 of the stopper 23 into surface contact, they may be brought into line contact over an entire circumference of the mouth portion 5. For example, the leading end surface 31 of the mouth portion 5 may form an annular rib which protrudes upward. Alternatively, the lower surface of the lower portion 28 may form an annular rib which protrudes downward.

Even where the annular rib which protrudes upward or downward is disposed at one of the mouth portion 5 and the lower portion 28, the lower portion 28 comes into line contact with the mouth portion 5. Therefore, as compared with a case where they come into surface contact with each other, it is possible to increase a pressure by which the lower portion 28 and the mouth portion 5 are pressed and also to seal a clearance between them more reliably. Further, where the rib is disposed at the mouth portion 5, the rib cuts into the lower portion 28 and, therefore, it is possible to increase a force by which the lower portion 28 regulates deformation of the mouth portion 5.

Two or more of all the constitutions which have been described so far may be combined. Two or more of all the steps which have been described so far may be combined.

Next, examples of features derived from the present description and the attached drawings will be described below.

### [Item 1-0]

A medical cap which closes an opening,
the medical cap which has
a stopper which is arranged inside a tubular mouth portion that forms the opening and
a case including a tubular inner wall which is arranged between the stopper and the mouth portion and a tubular outer wall which surrounds the inner wall via a tubular space that houses the mouth portion.

### [Item 1-1]

The medical cap according to Item 1-0 in which the inner wall is arranged between the stopper and the mouth portion in a state of being in contact with the stopper and the mouth portion, the inner wall includes a thin portion and a thick portion different from each other in thickness in a radial direction of the case, and the thin portion and the thick portion are arranged in a circumferential direction of the case.

### [Item 1-2]

The medical cap according to Item 1-1 in which an outer circumferential surface of the inner wall forms an external recessed portion which is recessed in the radial direction of the case at a position of the thin portion and an external raised portion which protrudes in the radial direction of the case at a position of the thick portion.

### [Item 1-3]

The medical cap according to Item 1-1 or Item 1-2 in which an inner circumferential surface of the inner wall is cylindrical.

### [Item 1-4]

The medical cap according to any one of Item 1-1 to 1-3 in which the stopper includes a lower end portion which protrudes downward from a lower end of the inner wall, and the lower end portion is in contact with an inner circumferential surface of the mouth portion.

### [Item 1-5]

The medical cap according to any one of Item 1-1 to 1-4 in which an inner circumferential surface of the outer wall includes an external contact portion which is arranged higher than the lower end of the inner wall, and the external contact portion is in contact with an internal contact portion which is disposed on an outer circumferential surface of the mouth portion.

### [Item 1-6]

The medical cap according to Item 1-5 in which the external contact portion of the outer wall includes a recessed portion which houses a raised portion that is disposed at the internal contact portion of the mouth portion.

### [Item 1-7]

The medical cap according to any one of Item 1-1 to 1-6 in which the outer wall includes an upper recessed portion which houses an upper raised portion that is disposed on the outer circumferential surface of the mouth portion and a lower raised portion which is housed at a lower recessed portion that is disposed on the outer circumferential surface of the mouth portion.

### [Item 1-8]

The medical cap according to any one of Item 1-1 to 1-7 in which a lower end of the outer wall is arranged above an annular neck flange which is disposed on the outer circumferential surface of the mouth portion, and an outer diameter of the lower end of the outer wall is not more than an outer diameter of the neck flange.

### [Item 2-1]

The medical cap according to any one of Item 1-0 to 1-7 in which the case includes an upper wall which is arranged above the mouth portion that is arranged at the tubular space, and
the stopper includes an internal portion which is surrounded by the inner wall and a lower portion which is arranged between the upper wall and the mouth portion that is arranged at the tubular space.

### [Item 2-2]

The medical cap according to any one of Item 1-0 to 1-7 and Item 2-1 in which the lower portion is arranged between the mouth portion and the upper wall in a state of being in contact with both of the upper wall and the mouth portion that is arranged at the tubular space.

### [Item 2-3]

The medical cap according to any one of Item 1-0 to 1-7 and Item 2-1 to 2-2 in which the stopper includes a lower end portion which protrudes downward from the lower end of the inner wall, and
the lower end portion is in contact with the inner circumferential surface of the mouth portion.

### [Item 2-4]

The medical cap according to any one of Item 1-0 to 1-7 and Item 2-1 to 2-3 in which the stopper further includes a connection portion which connects the lower portion to the internal portion via a through hole which penetrates through the case.

### [Item 2-5]

The medical cap according to any one of Item 1-0 to 1-7 and Item 2-1 to 2-4 in which the stopper further includes an upper portion which extends to a position above the upper wall from the internal portion, and
the connection portion extends to the lower portion from the upper portion via the through hole which penetrates up and down through the upper wall.

### [Item 2-6]

The medical cap according to Item 2-5 in which the outer circumferential surface of the inner wall forms an external recessed portion which is recessed in the radial direction of the case, and when the medical cap is viewed from below, at least a portion of the through hole which penetrate up and down through the upper wall is arranged inside the external recessed portion.

### [Item 2-7]

The medical cap according to any one of Item 1-0 to 1-7 and Item 2-1 to 2-6 in which the inner wall and the upper wall form a root-side recessed portion which is recessed from the outer circumferential surface of the inner wall, and the root-side recessed portion houses a portion of the lower portion.

### [Item 2-8]

The medical cap according to any one of Item 1-0 to 1-7 and Item 2-1 to 2-7 in which the internal portion of the stopper includes a large diameter portion which is surrounded by the inner wall and a small diameter portion which is smaller in outer diameter than the large diameter portion,
the small diameter portion extends downward from a lower end of the large diameter portion, and
the lower end of the inner wall is arranged at a position lower than the lower end of the large diameter portion and higher than a lower end of the small diameter portion.

### [Item 3]

A medical container which includes a container main body including a tubular mouth portion which forms an opening and a housing portion which houses the liquid and the medical cap according to any one of Item 1-0 to 1-7 and Item 2-1 to 2-8.

### [Item 4-1]

A method for manufacturing a medical container including a tubular mouth portion that forms an opening and a medical cap that closes the opening, in which
the mouth portion is made of a thermoplastic resin,
the medical cap is provided with a stopper which is arranged inside the mouth portion that forms the opening, and
a case including a tubular inner wall which is arranged between the stopper and the mouth portion in a state of being in contact with the stopper and the mouth portion and a tubular outer wall which surrounds the inner wall via a tubular space that houses the mouth portion,
the inner wall includes a thin portion and a thick portion which are different from each other in thickness in a radial direction of the case, and
the thin portion and the thick portion are arranged in a circumferential direction of the case, and
the method includes
a step of arranging the mouth portion at the tubular space by combining the medical cap and the mouth portion with each other and
a step of changing the medical cap and the mouth portion from a state in which an internal contact portion which is disposed on an outer circumference surface of the mouth portion is separated from an external contact portion which is disposed on an inner circumferential surface of the outer wall to a state in which the internal contact portion is in contact with the external contact portion by heating the medical cap and the mouth portion which have been combined.

### [Item 4-2]

A method for manufacturing a medical cap which closes an opening, in which
the medical cap includes
a stopper which is arranged inside a tubular mouth portion that forms the opening and
a case including a tubular inner wall which is arranged between the stopper and the mouth portion, a tubular outer wall which surrounds the inner wall via a tubular space that houses the mouth portion and an upper wall which is arranged above the mouth portion that is arranged at the tubular space,
the stopper includes an internal portion which is surrounded by the inner wall and a lower portion which is arranged between the upper wall and the mouth portion that is arranged at the tubular space, and
the method includes
a step of arranging the case inside a mold and
a step of forming the stopper by injecting a melted material of the stopper into a cavity that is formed by the case and the mold and cooling the material inside the cavity.

While the preferred embodiments of the present invention have been described in detail, these are merely specific examples used to clarify the technical content of the present invention and the present invention should not be interpreted as being limited to these specific examples, and the spirit and the scope of the present invention shall be limited only by the appended claims.

### Reference Signs List

1: Medical container
2: Medical cap
4: Opening
5: Mouth portion
11: Case
13: Outer wall
14: Upper wall
15: Inner wall
15L: Lower end of inner wall
15i: Inner circumferential surface of inner wall
15o: Outer circumferential surface of inner wall
16: External recessed portion
17: External raised portion
18: Thin portion
19: Thick portion
20: Root-side recessed portion
23: Stopper
24: Internal portion
25: Large diameter portion
25L: Lower end of large diameter portion
26: Small diameter portion (lower end portion of stopper)
26L: Lower end of small diameter portion
27: Upper portion
28: Lower portion
29: Connection portion
30: Through hole
41: Lower raised portion
42: Upper recessed portion
43: External contact portion
43c: Recessed portion
44: Neck flange
45: Lower recessed portion
46: Upper raised portion
48: Internal contact portion
48c: Raised portion
51: Movable mold
52: Fixed mold
53: Cavity
Dc: Circumferential direction of case
Dr: Radial direction of case
S1: Tubular space

## Claims

1. A medical cap which closes an opening through which a liquid passes, the medical cap comprising:
a stopper which is arranged inside a tubular mouth portion that forms the opening; and
a case including a tubular inner wall which is arranged between the stopper and the mouth portion, a tubular outer wall which surrounds the inner wall via a tubular space that houses the mouth portion and an upper wall which is arranged above the mouth portion that is arranged at the tubular space, wherein
the stopper includes an internal portion which is surrounded by the inner wall and a lower portion which is arranged between the upper wall and the mouth portion that is arranged at the tubular space.

2. The medical cap according to Claim 1, wherein
the lower portion is arranged between the mouth portion and the upper wall in a state of being in contact with both of the upper wall and the mouth portion that is arranged at the tubular space.

3. The medical cap according to Claim 2, wherein
the stopper includes a lower end portion which protrudes downward from a lower end of the inner wall, and
the lower end portion is in contact with an inner circumferential surface of the mouth portion.

4. The medical cap according to Claim 3, wherein
the stopper further includes a connection portion which connects the lower portion to the internal portion via a through hole which penetrates through the case.

5. The medical cap according to Claim 4, wherein
the stopper further includes an upper portion which extends from the internal portion to a position above the upper wall, and
the connection portion extends from the upper portion to the lower portion via the through hole which penetrates up and down through the upper wall.

6. The medical cap according to Claim 5, wherein
an outer circumferential surface of the inner wall forms an external recessed portion which is recessed in a radial direction of the case, and
when the medical cap is viewed from below, at least a portion of the through hole which penetrates up and down through the upper wall is arranged inside the external recessed portion.

7. The medical cap according to any one of Claim 1 to 6, wherein
the inner wall and the upper wall form a root-side recessed portion which is recessed from an outer circumferential surface of the inner wall, and
the root-side recessed portion houses a portion of the lower portion.

8. The medical cap according to any one of Claim 1 to 6, wherein
the internal portion of the stopper includes a large diameter portion which is surrounded by the inner wall and a small diameter portion smaller in outer diameter than the large diameter portion,
the small diameter portion extends downward from a lower end of the large diameter portion, and
a lower end of the inner wall is arranged at a position lower than the lower end of the large diameter portion and higher than a lower end of the small diameter portion.

9. A medical container comprising:
a container main body including a tubular mouth portion which forms an opening through which a liquid passes and a housing portion which houses the liquid, and
the medical cap according to any one of Claim 1 to 6.

10. A method for manufacturing a medical cap which closes an opening through which a liquid passes, wherein
the medical cap includes
a stopper which is arranged inside a tubular mouth portion that forms the opening, and
a case including a tubular inner wall which is arranged between the stopper and the mouth portion, a tubular outer wall which surrounds the inner wall via a tubular space that houses the mouth portion and an upper wall which is arranged above the mouth portion that is arranged at the tubular space,
the stopper includes an internal portion which is surrounded by the inner wall, a lower portion which is arranged between the upper wall and the mouth portion that is arranged at the tubular space and a connection portion which connects the lower portion to the internal portion via a through hole which penetrates through the case, and
the method for manufacturing the medical cap including
a step of arranging the case inside a mold and
a step of forming the stopper by injecting a melted material of the stopper into a cavity that is formed by the case and the mold and cooling the material inside the cavity.

11. The method for manufacturing the medical cap according to Claim 10, wherein
the mold includes a movable mold and a fixed mold, and
in the step of arranging the case inside the mold, the movable mold or the fixed mold supports an internal portion and an external portion of the inner wall.

12. The method for manufacturing the medical cap according to Claim 10 or 11, wherein
the mold includes a movable mold and a fixed mold,
the outer wall has a disk-shaped recessed portion which is recessed downward from an upper surface of the outer wall, and
in the step of arranging the case inside the mold, the movable mold or the fixed mold supports an inner circumferential surface of the disk-shaped recessed portion.
